# EUROPEAN PATENT APPLICATION

(11) **EP 3 848 796 A1**
(43) Date of publication of application: **14.07.2021**
(21) Application number: 20150483.4
(22) Date of filing: 07.01.2020
(51) Int. Cl.: G06F 8/71, G06F 9/50

(54) **SCALABLE BUILD ENVIRONMENT**

(71) Applicant: KNORR-BREMSE Systeme für Nutzfahrzeuge GmbH, 80809 München (DE)
(72) Inventor: SHAIKH, Altaf, 411020 Pune (IN)

(57) **Abstract**

Disclosed is a method for a build process in a build environment for building software executable by an electronic processor, comprising the steps: a. defining a list of tasks that have to be performed for the build process, b. determining the runtime characteristics for the tasks within the list of tasks in at least two operating system environments, c. grouping the tasks into groups correlated to the at least two operating system environments according to the tasks' runtime characteristics, d. providing a build environment system providing the at least two operating systems, e. providing a build environment structure configured such that during the build process, the tasks are executed either on a first of the at least two operating system environments or a second of the at least two operating system environments, depending on the group the task was grouped in step c., and f. executing the build process.

## Description

The invention relates to a method and a device for a scalable build environment for the automotive development domain and relates in particular to such a scalable build environment that scales seamlessly over different operating systems.

In the automotive development domain, there are complex features that build environments have to support. These are e.g. the power to compile several third party source code segments with different compiler versions and flag settings. Further, different tools for static code analysis have to be applied to hand-written and automatically generated source code and support for MISRA C standards (Motor Industry Software Reliability Association) for source code in C programming language is required.

Although corresponding compilers and tools are available for several platforms, runtime tests exhibit that they perform differently in different environments.

Hitherto, for a build environment in the automotive development domain, a specific platform was chosen and provided with compilers and tools configured to be executable on that platform. This, however, provided systems that could not completely use the processing performance of the used hardware such that the system's processing capacity constantly was not achieved and the processor resource utilization constantly remained far below 100%.

It is the object of the invention to solve the problems of the related art and to provide a build environment that enables a maximized utilization of a system's hardware resources.

This object is solved by the subject-matter of method claim 1, and system claim 8.
Advantageous developments are subject-matter of the dependent claims.

Disclosed is a method for a build process in a build environment for building software executable by an electronic processor, comprising the steps: defining a list of tasks that have to be performed for the build process, determining the runtime characteristics for the tasks within the list of tasks in at least two operating system environments, grouping the tasks into groups correlated to the at least two operating system environments according to the tasks' runtime characteristics, providing a build environment system providing the at least two operating systems, providing a build environment structure configured such that during the build process, the tasks are executed either on a first of the at least two operating system environments or a second of the at least two operating system environments, depending on the group the task was grouped in the grouping step, and executing the build process.

Further, disclosed is a system for a build environment, comprising: an electronic data processing device (1), a Microsoft Windows based environment (8) installed on the electronic data processing device, and a Unix based environment (10) installed on the electronic data processing device, wherein the system is configured to perform the above method.

This enables execution of a build procedure with maximized resource usage of the build system.

In the following, the invention is described by means of an embodiment with reference to the figures.
Fig. 1 shows a schematic view of a system for a build environment according to the invention.
Fig. 2 shows a schematic view of a configuration of a Cygwin environment in the system of Fig. 1.
Fig. 3 shows an overview of the structure of the build environment.
Fig. 4 shows a flow chart of a build procedure in the build environment of Fig. 1.

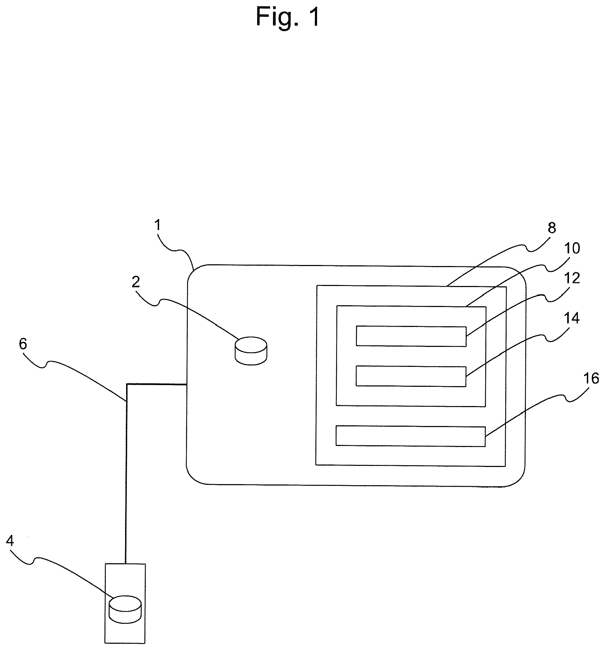

Fig. 1 shows a schematic view of a system according to the invention. The system is a build environment for the automotive development domain for developing program code that is executed on Infineon's® TriCore® microcontroller, a 32-bit microcontroller that is frequently used in the automotive domain for engine control units in gasoline and diesel vehicles, applications in hybrid and electric vehicles and transmission, active and passive safety and chassis applications. The system comprises an electronic data processing device 1. In the present invention, the electronic data processing device is a common personal computer. Alternatively, the electronic data processing device may be a server device or a group of several personal computers, workstations or server devices.

The electronic data processing device 1 contains a data storage medium 2. The data storage medium is a conventional hard disk drive or solid state drive provided with a file system capable of storing files. In the present embodiment, the data storage medium is contained in the electronic data processing device in a manner that the electronic data processing device is capable of reading files from and writing files to the data storage medium. Alternatively, the data storage medium may be a data storage 4 externally provided from the electronic data processing devise like a file server, a NAS device or an externally connected drive and accessible by the electronic data processing devise 1 via electronic data communication devices 6 like a computer network or any cable bound or wireless data communication device.

The electronic data processing device 1 provides a Microsoft® Windows® based operating system environment 8. In the operating system environment 8, there is provided a Cygwin® environment 10. The Cygwin environment 10 may access a user shell like bash and windows command line interface cmd.exe and is described in further detail below.

Several software tools like PC-lint® 16 and Bauhaus® 18 are installed in the Windows environment 8 and stored on the data storage medium 2 in a manner that the software tools can be executed in the Windows environment 8.

PC-lint is a commercial software linting tool produced by Gimpel Software® for the C/C++ languages. PC-lint is a command-line tool for performing static code analysis, indicating suspicious or plain wrong issues in source code. PC-lint can be integrated into integrated development environments (IDE) as an external tool, and the format of the warning messages can be adapted to the form the IDE is able to recognize and process. It is executable on Microsoft Windows and OS/2. PC-lint is for quality assurance of C or C++ source code and checking the code for conformance to coding guidelines such as MISRA C or MISRA C++.

The Bauhaus Toolkit includes a static code analysis tool for C, C++, C#, Java and Ada code. It comprises various analyses such as architecture checking, interface analysis, and clone detection. The Bauhaus tool suite allows the analysis of source code by creating abstractions (representations) of the code in an intermediate language as well as through a resource flow graph (RFG). The RFG is a hierarchal graph with typed nodes and edges, which are structured in various views.

In the Cygwin environment 10, there is installed a compiler 12. In this embodiment, the compiler is tricore-gcc.exe that generates cross compiled executable codes for the TriCore microcontroller.

Further, in the Cygwin environment 10, there is installed a build system like Ninja or Make.

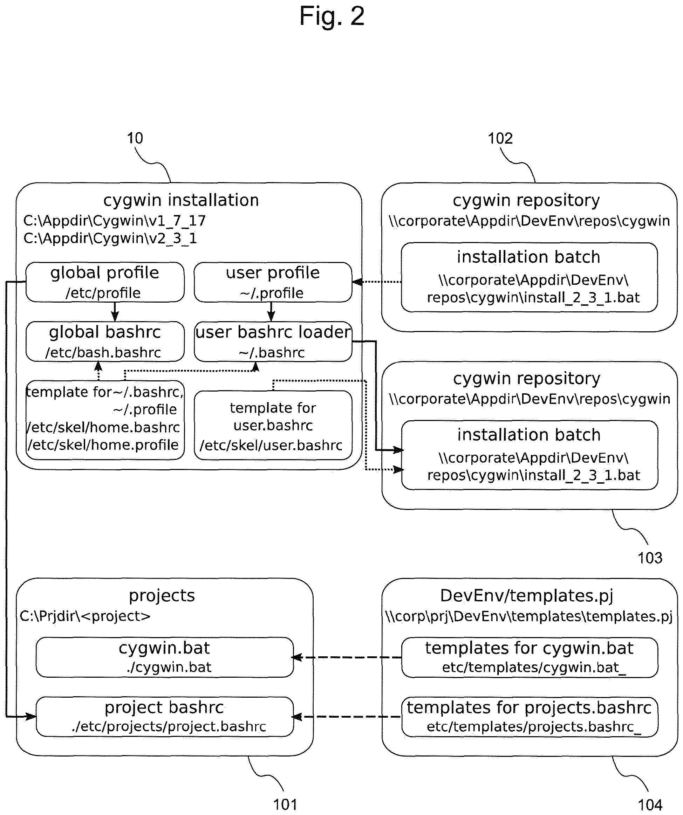

As it can be seen in Fig. 2, The Cygwin environment 10 is configured in a manner that, when a bash user shell is invoked, it is initialized by a global configuration file stored in a directory accessible in the Cygwin environment 10 under /etc/bash.bashrc, a project specific configuration file stored in a directory accessible in the Cygwin environment 10 under /etc/project/project.bashrc and a user specific a global configuration file stored in a directory accessible in the Cygwin environment 10 under ∼/.bashrc. In Fig. 2, dotted arrows represent an automated copy, dashed arrows represent a manual copy, and solid arrows represent a load procedure. The profile files only get invoked when bash gets started as login shell. The project.bashrc gets only invoked when Cygwin is started from a project.

A bash user shell in the Cygwin environment 10 is started by a script file having the following structure

```
 @echo off
 SET CYGVERSION= V2_3_1
 SET PROJECTBASHRC=./etc/project. bashrc
 IF not exist C:\Appdir\Cygwin\%CYGVERSION% (goto :q_install]
 ELSE (goto :start_cygwin)
 :q_install
 #perform necessary steps to install Cygwin environment
 :start_cygwin
 echo %0 %*
 IF [%1] == [-c] (
  SET NOCOLOR=true
  C:\Appdir\CygwinC\%CYGVERSION%\bin\bash.exe -l -i %*
  )
  ELSE
 start C:\Appdir\Cygwin\%CYGVERSION%\bin\mintty.exe --ecex
  C:\Appdir\Cygwin\%CYGVERSION%\bin\bash.exe -l-install
  )
  :exit
```

As it can be seen, if the Cygwin environment 10 is not present, it is automatically installed from a repository 102 with the correct configuration. Otherwise, a bash user shell in the Cygwin environment 10 is started, if required a Cygwin terminal emulator is started executing the bash user shell.

A project specific project specific "project.bashrc" is shown below:

```
 # Project Root
 export PRJROOT_WIN='cygpath -aw.'
 export PRJROOT_CYG='cygpath -au.'
 export PRJROOT_MIX='cygpath -am.'
 # Print load info on screen
 echo "loading ${PRJROOT_MIX}/project.bashrc"
 # Global Tool Paths
 BC_PATH='C:\Program Files (x86)\Beyond Compare 4.0.3'
 DOT_PATH='C:\Appdir\DevEnv\graphviz\v2_36_0\bin'
 DOXY_PATH='C:\Appdir\DevEnv\doxygen\v1_8_6\bin'
 GS_PATH='C:\Appdir\DevEnv\gs\v9.06w32\bin'
 JAVA_PATH='C:\Appdir\Integrity\IntegrityClient10\jre\bin'
 KBDIAG_PATH='C:\Program Files\KB Diag'
 LATEX_PATH='C:\Appdir\MiKTeX\v29\miktex\bin'
 MKS_PATH='C:\Appdir\Integrity\IntegrityClient10\bin'
 POLYSPACE_PATH='C:\Appdir\MATLAB\R2017b\polyspace\bin'
 # Project Tool Paths
 COMPILER_PATH="$PWD/bin/tcgcc_V4_6_6_1/licensemanager"
 RLM_LICENSE_S='xxxxxxx'
 RLM_LICENSE_N='xxxxxxx'
 RLM_LICENSE_P='xxxxxxx'
 RLM_LICENSE_B='xxxxxxx'
 RLM_LIC_LOC="RLM_LICENSE_${HOSTNAME::1}"
 export RLM_LICENSE=${RLM_LICENSE-${!RLM_LIC_LOC}}
 # Environment Variables
 DEVENVBIN="$PWD/bin"
 DEVENVETC="$PWD/etc"
 DEVENVLIB="$PWD/lib"
 LUA_PATH="$PWD/lib/?.lua"
 LUA_CPATH="$PWD/lib/?.dll"
 PERL5LIB=$DEVENVLIB
 PYTHONPATH=$DEVENVLIB
 export PERL5LIB
 export DEVENVLIB
 export DEVENVETC
 export PYTHONPATH
 PRJPATH=$(/bin/cygpath -u -p "${MKS_PATH};${GS_PATH};\
 ${LATEX_PATH};${DOXY_PATH};${DOT_PATH};${KBDIAG_PATH};${POLYSPACE_PATH};\
 ${JAVA_PATH};${BC_PATH}"):${DEVENVBIN}:${COMPILER_PATH}
 PATH=$PRJPATH:$PATH
 MANPATH=$MANPATH:$PWD/man
 # Aliases
 alias R="cd ${PRJROOT_CYG}"
 alias mb="make build"
 alias mr="make rebuild"
 alias a2lg="make a2lg"
```

Via the initialization of the bash, the build procedure is initialized.

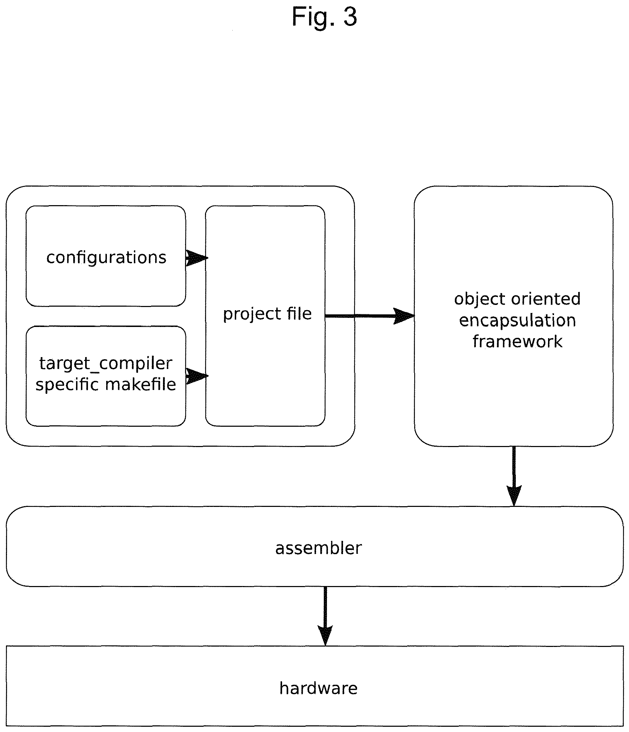

By referring to Fig. 3, the structure of the build environment is explained. A manufacturer in the automotive development domain usually is occupied with several projects, e.g. a project for lane keeping assistance by steering intervention or a project for emergency braking by braking intervention. Software or firmware for controllers for a specific project is build under consideration of several configurations, e.g. configurations app01 and app02 and specific compiler settings, e.g. TC26x_TCGCC. A project specific make file is listed below: 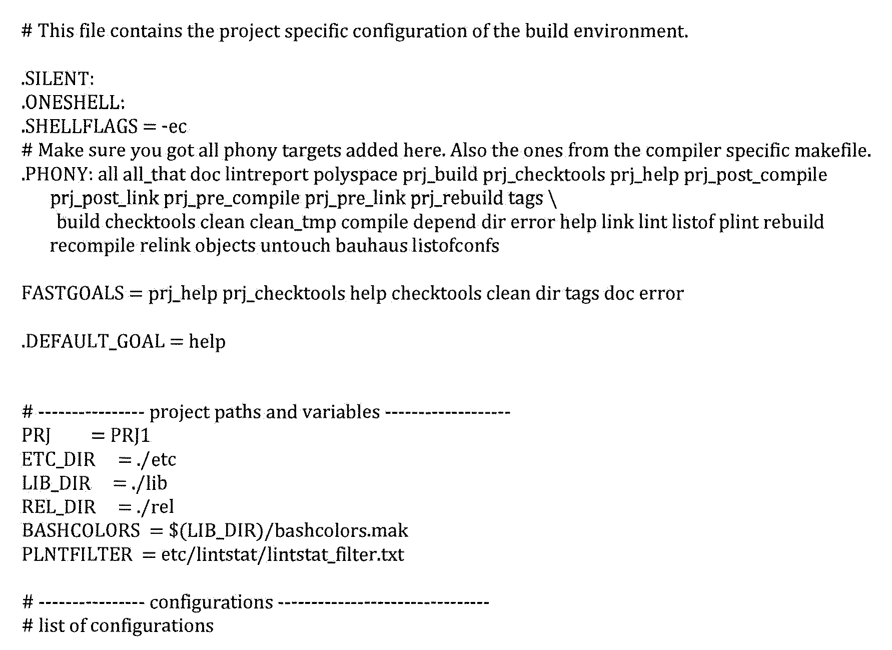 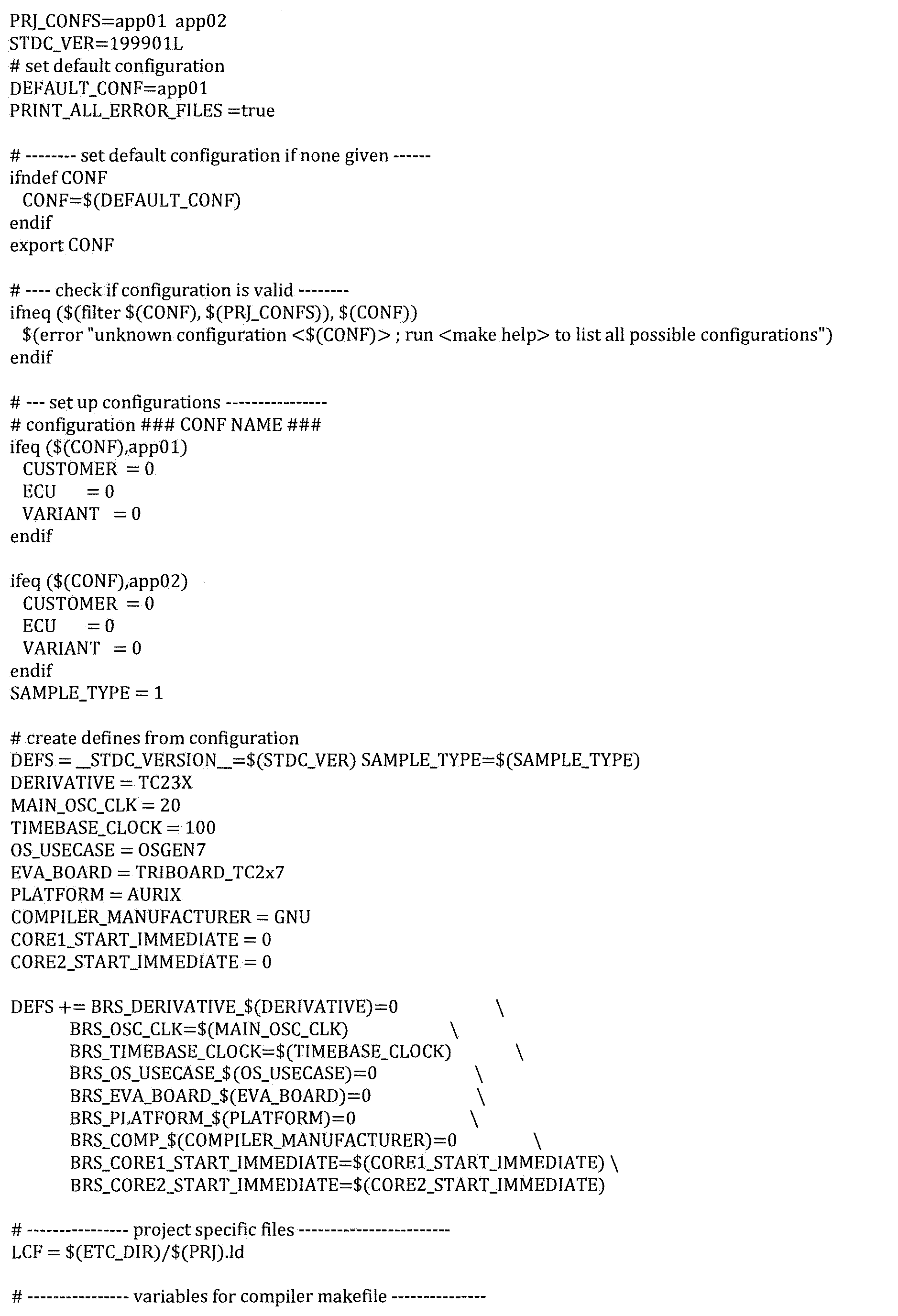 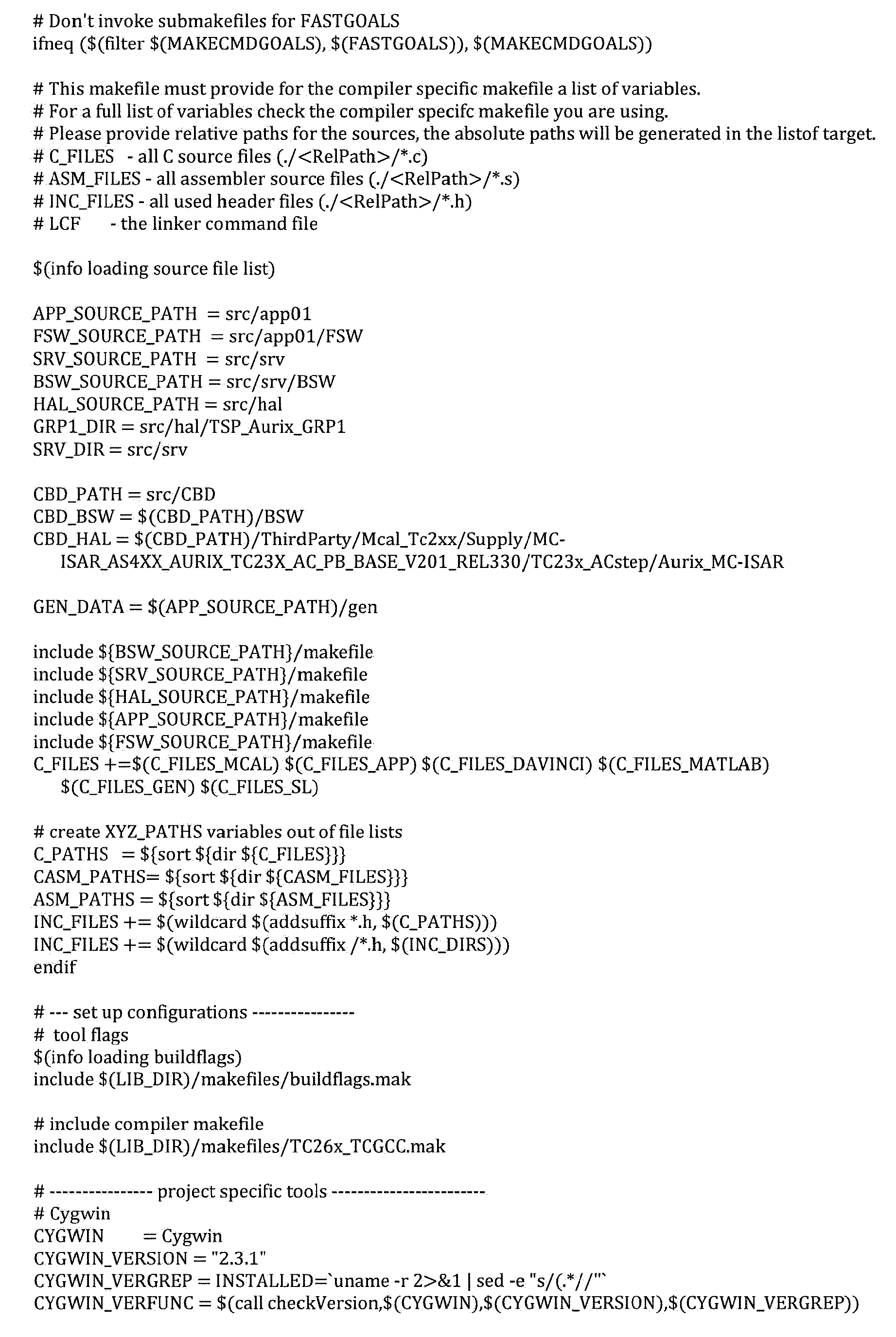 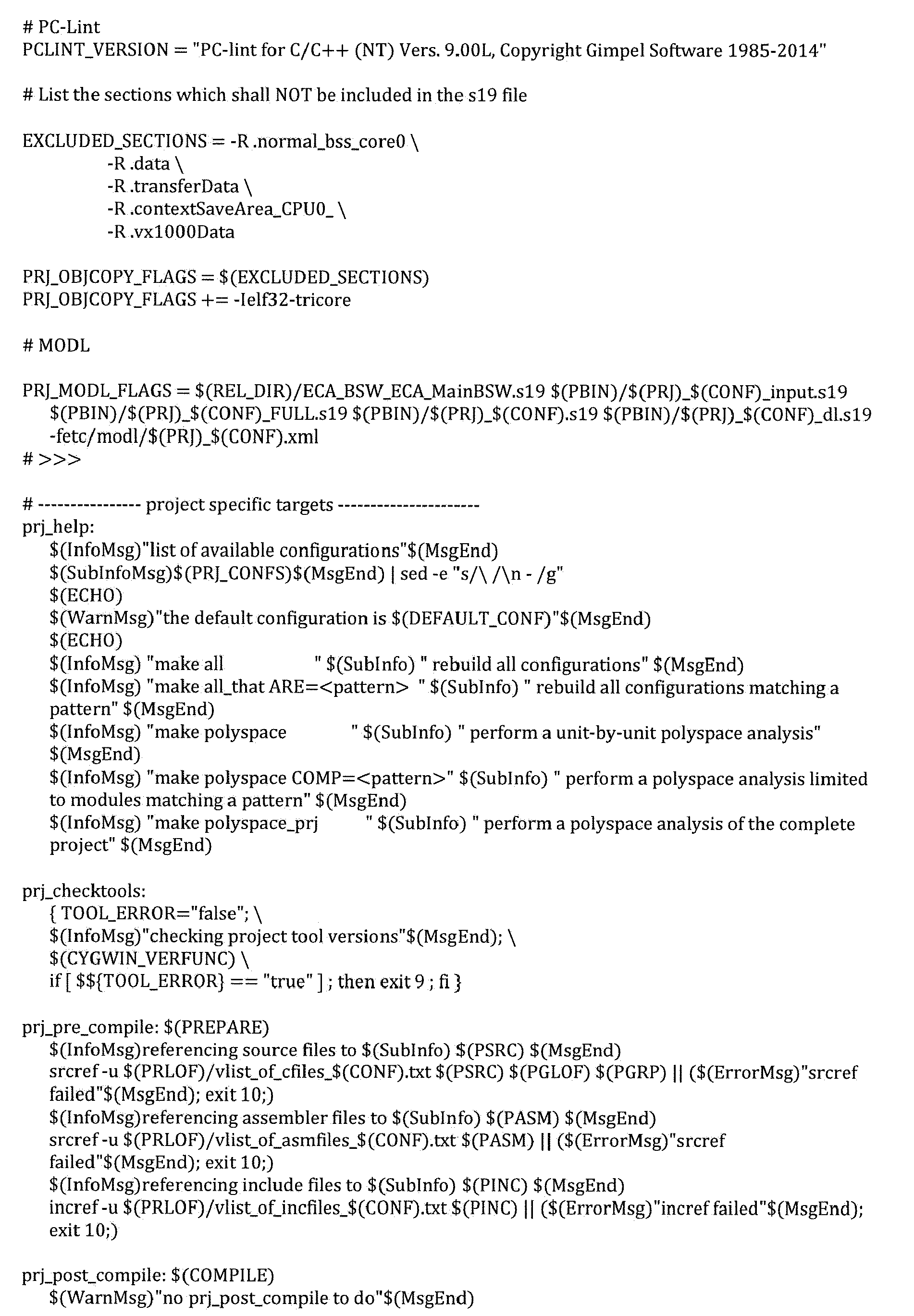 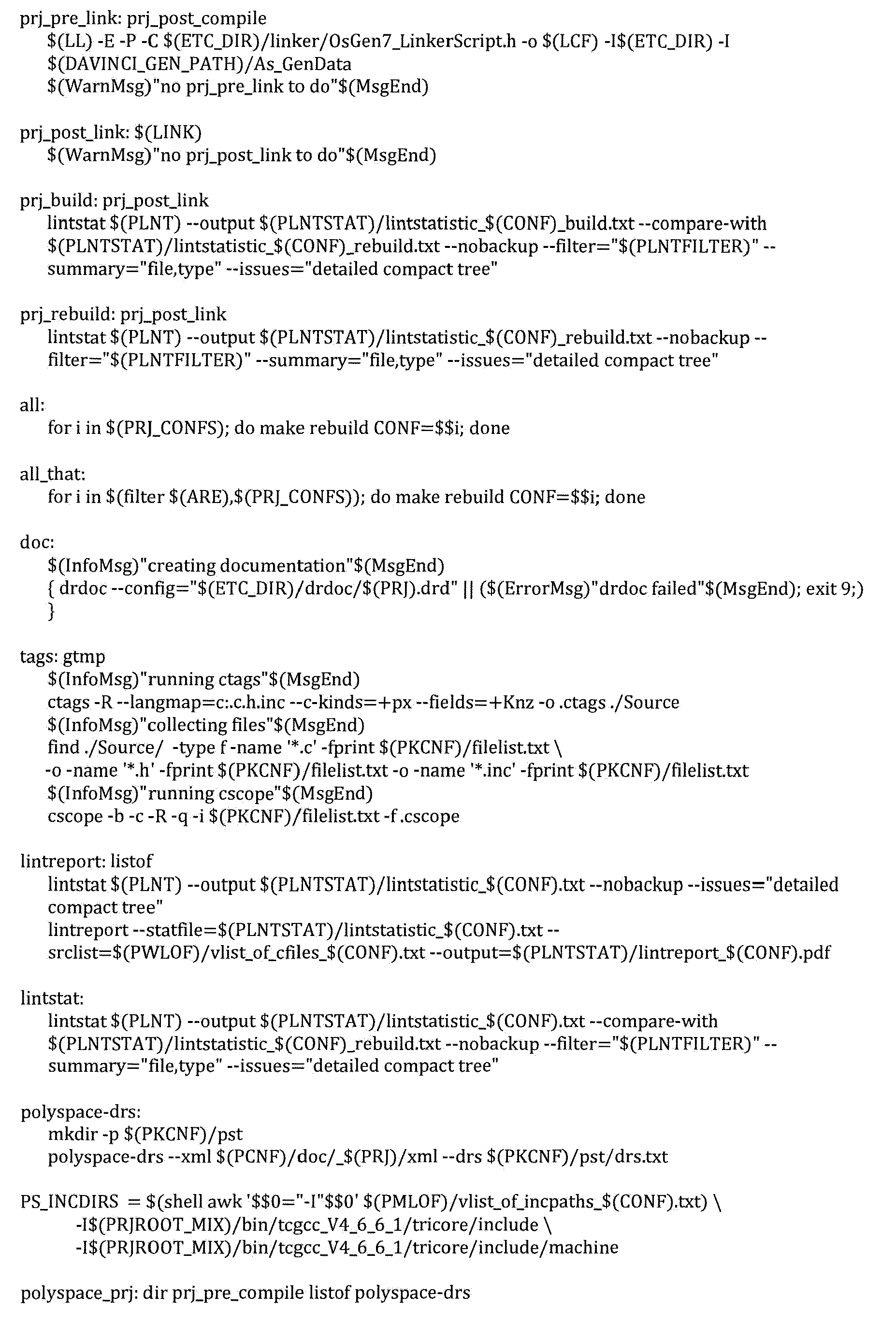 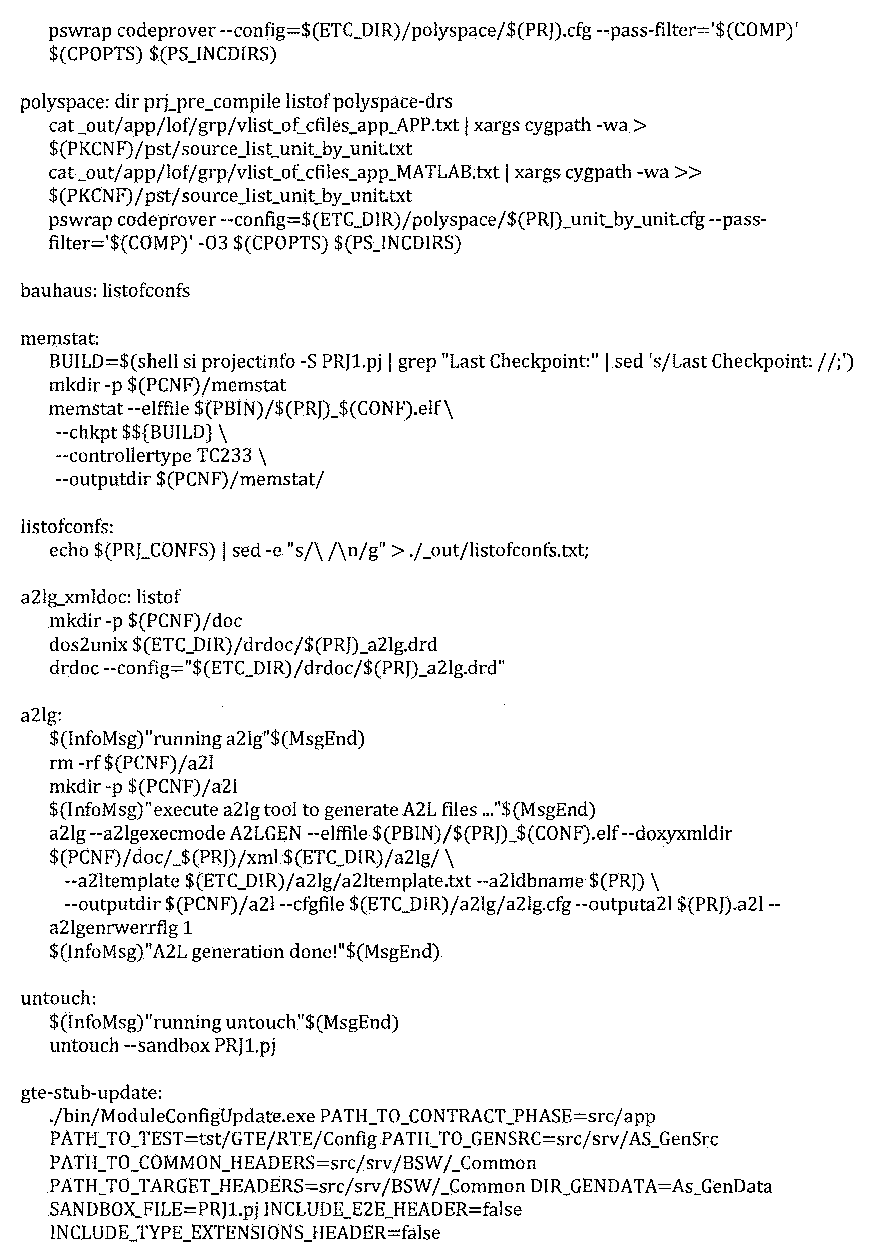 As it can be seen in the "# --- set up configurations ---" section, further makefiles "buildflags.mak" and "TC26x_TCGCC.mak" are included.

"buildflags.mak" defines different groups that may be applied to targets of software that have to be handled differently. In the specific embodiment, there are defined groups GRP1 and GRP2, wherein the groups are set up such that for targets to that group GRP1 is applied, e.g. a specific compiler version different from that of GRP2 has to be applied and the targets of group GRP1 are not subjected to PC-lint or Bauhaus static code analysis: 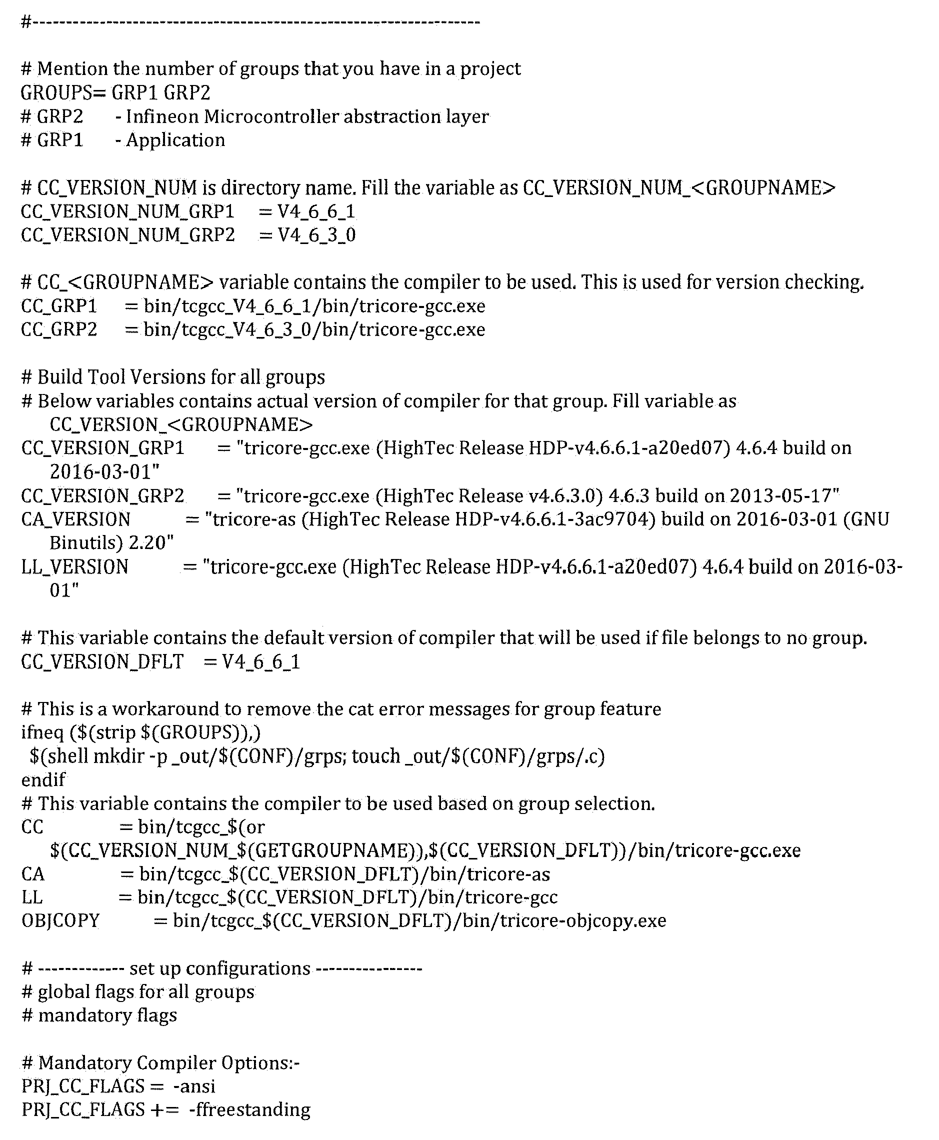 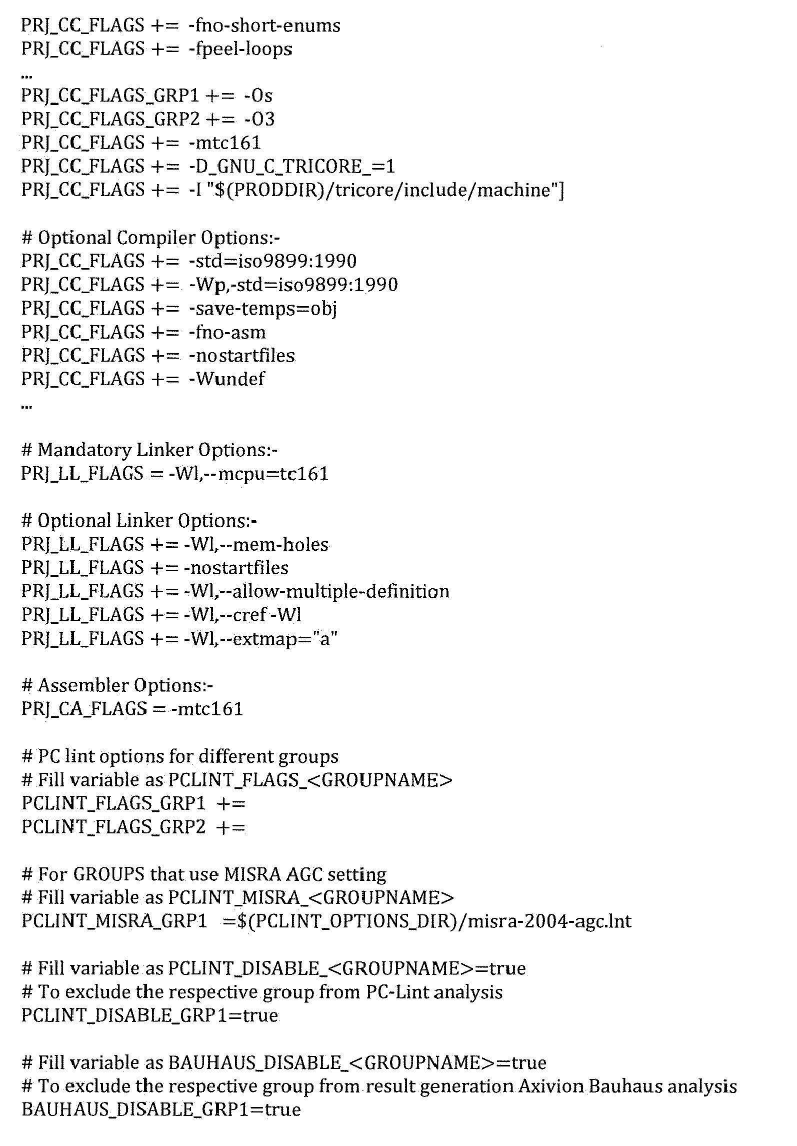 "TC26x_TCGCC.mak" defines compiler specific parameters and establishes the output file structure that is explained later. Below is an example for "TC26x_TCGCC.mak"

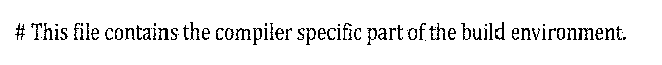

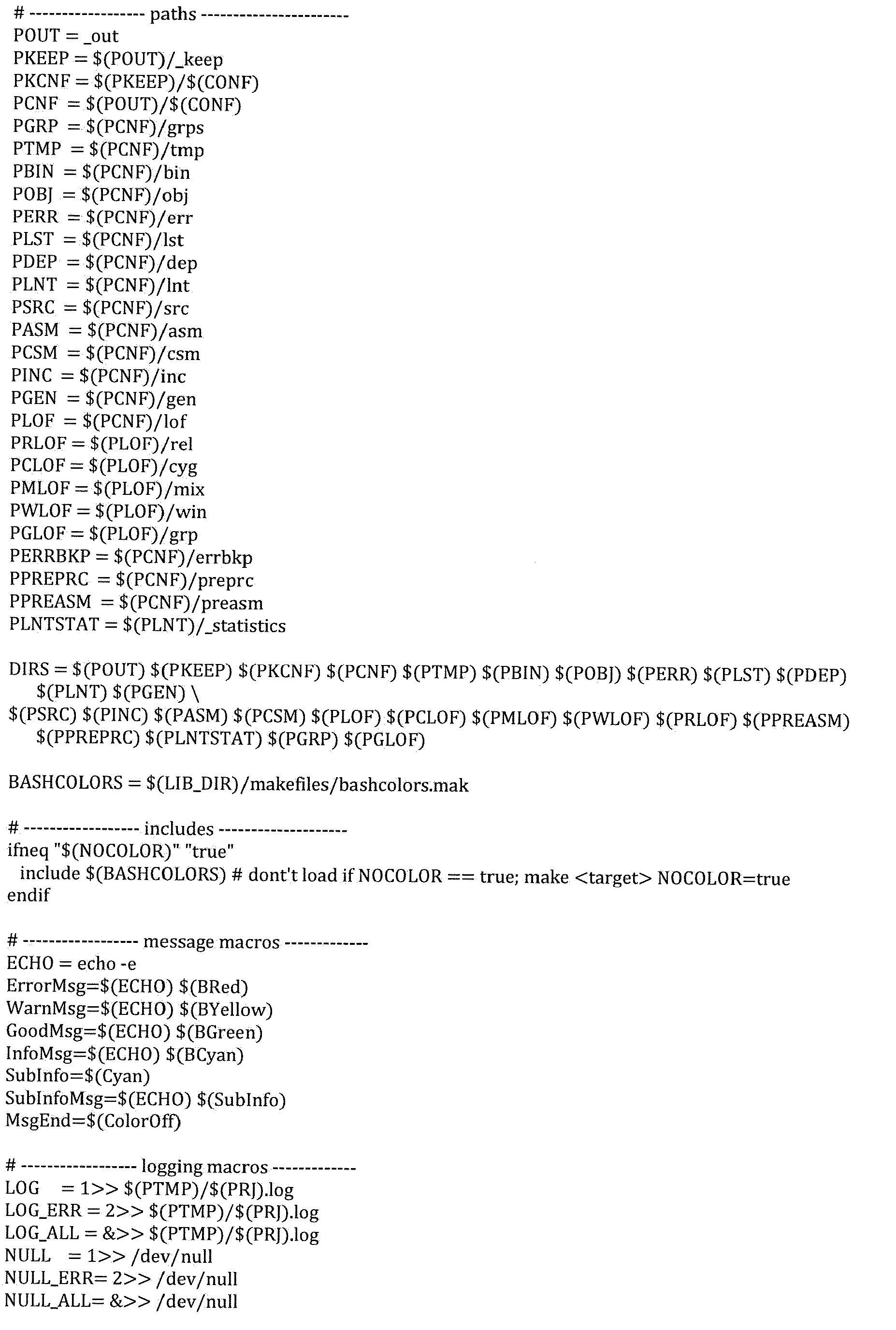

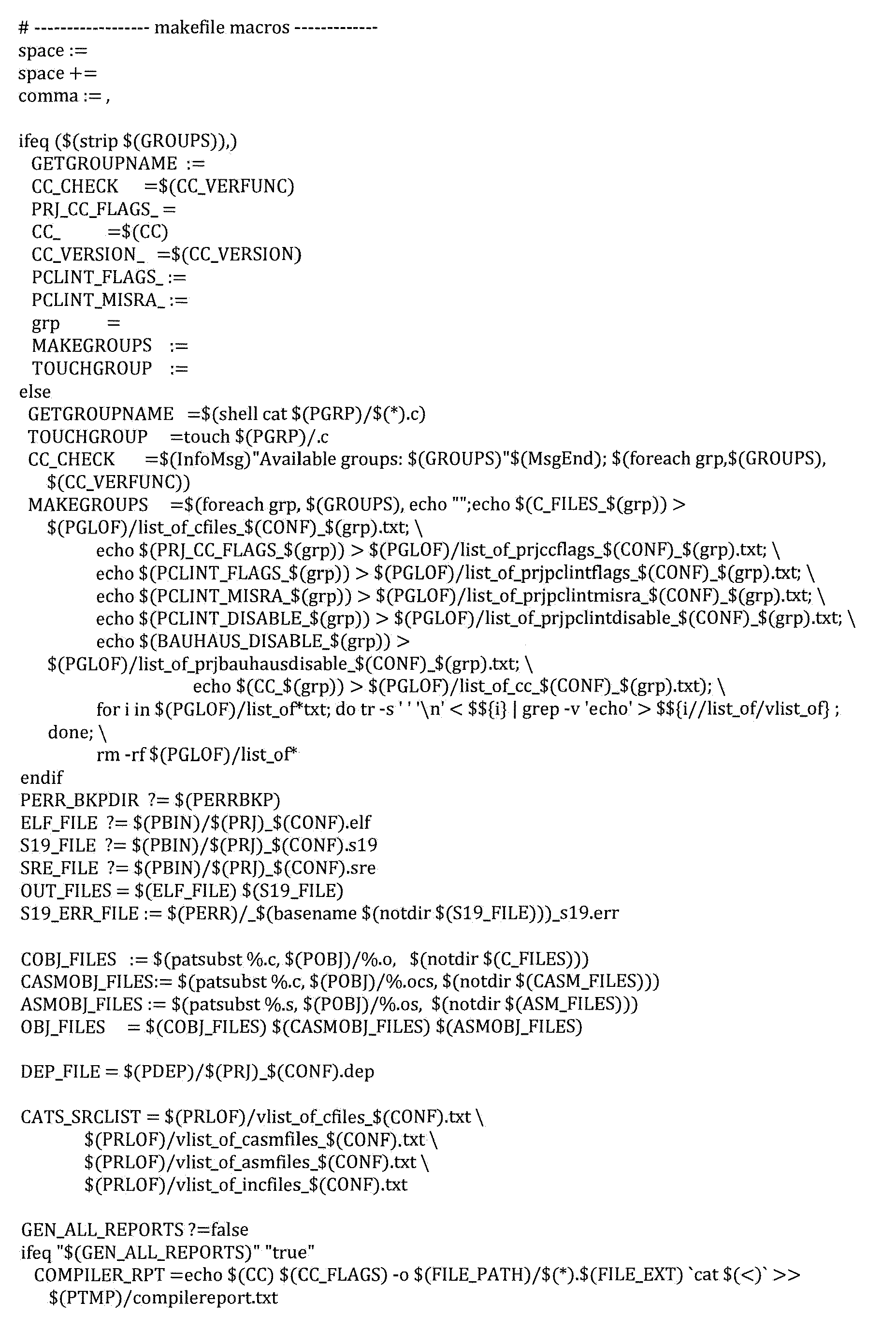

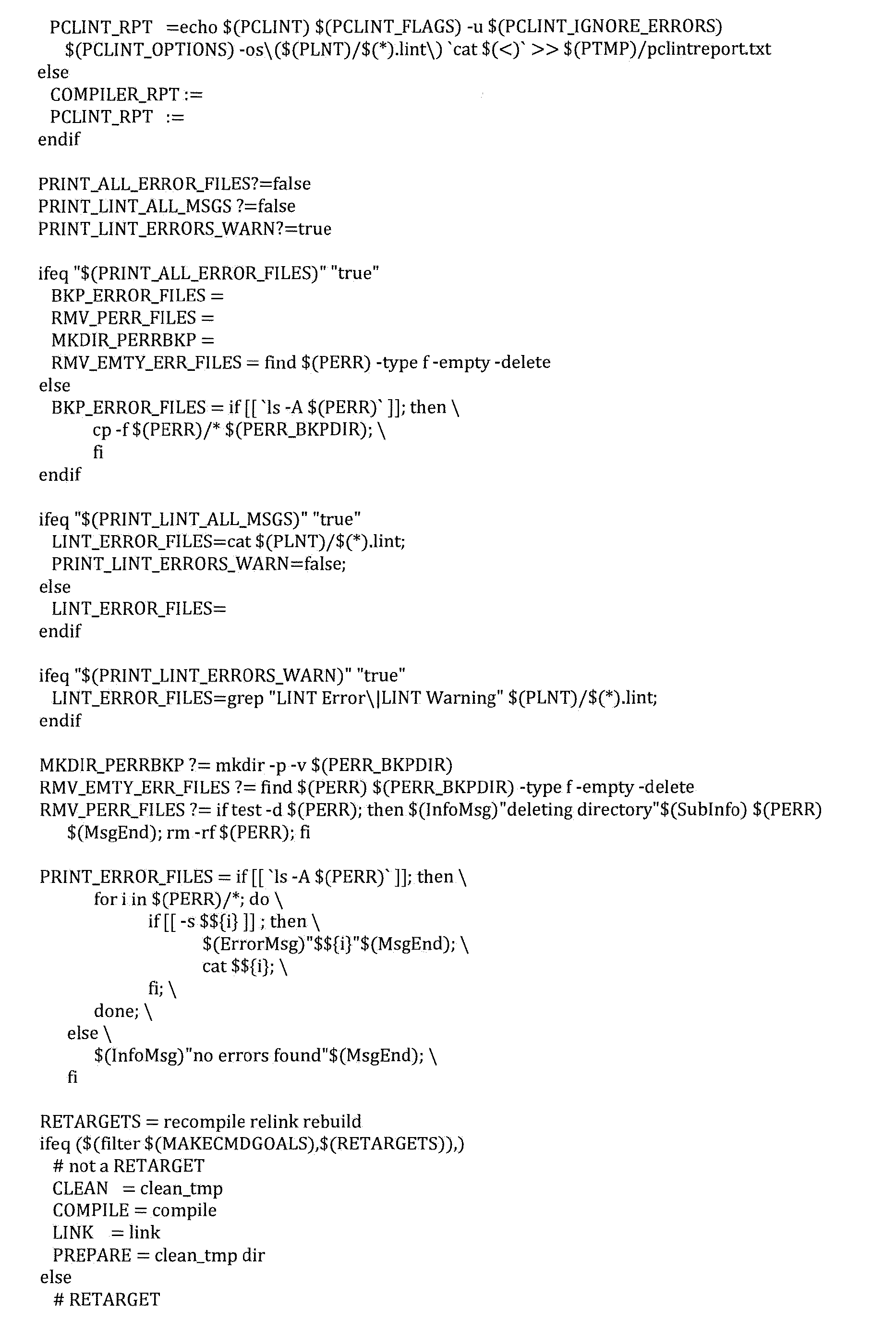

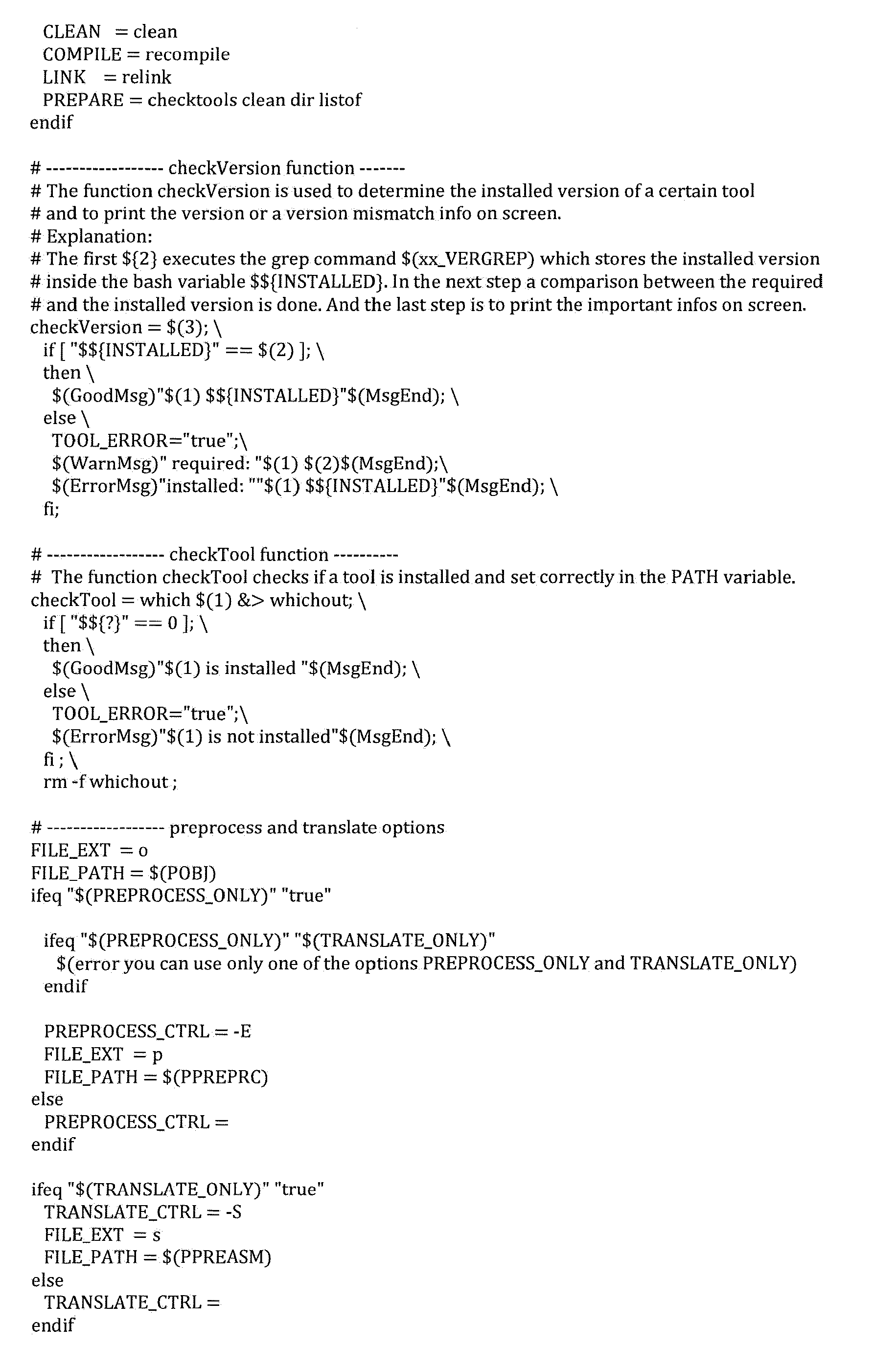

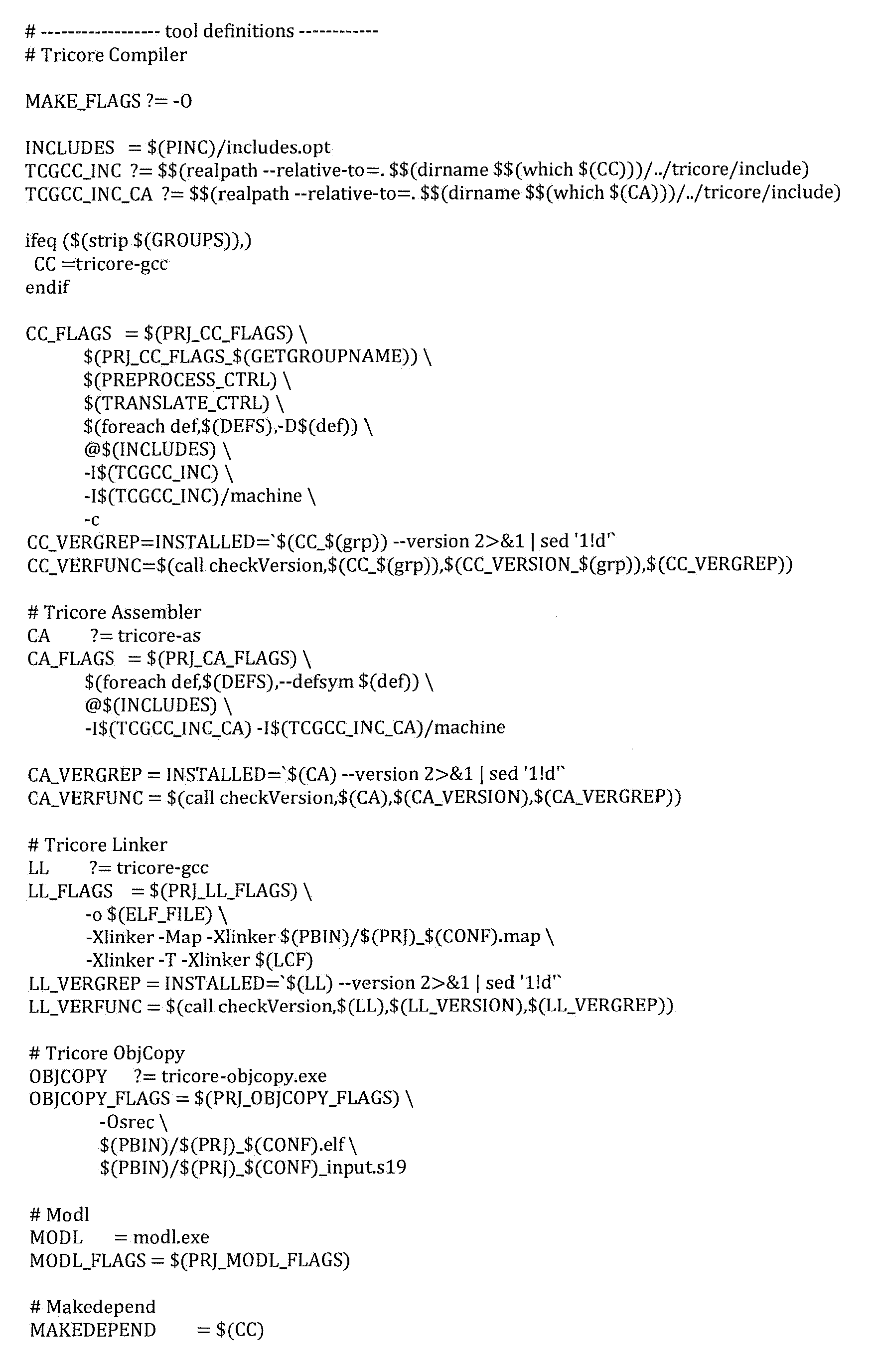

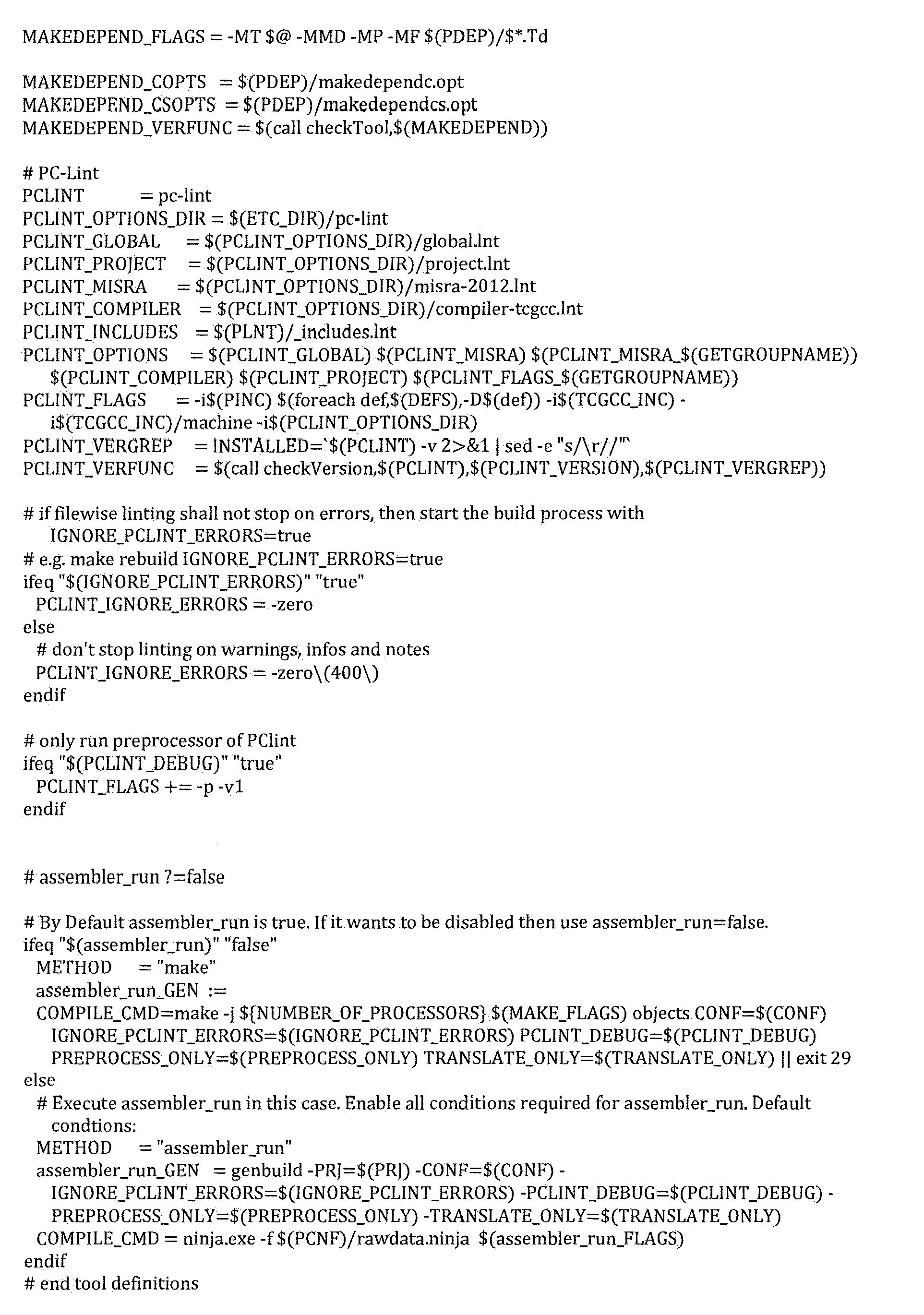

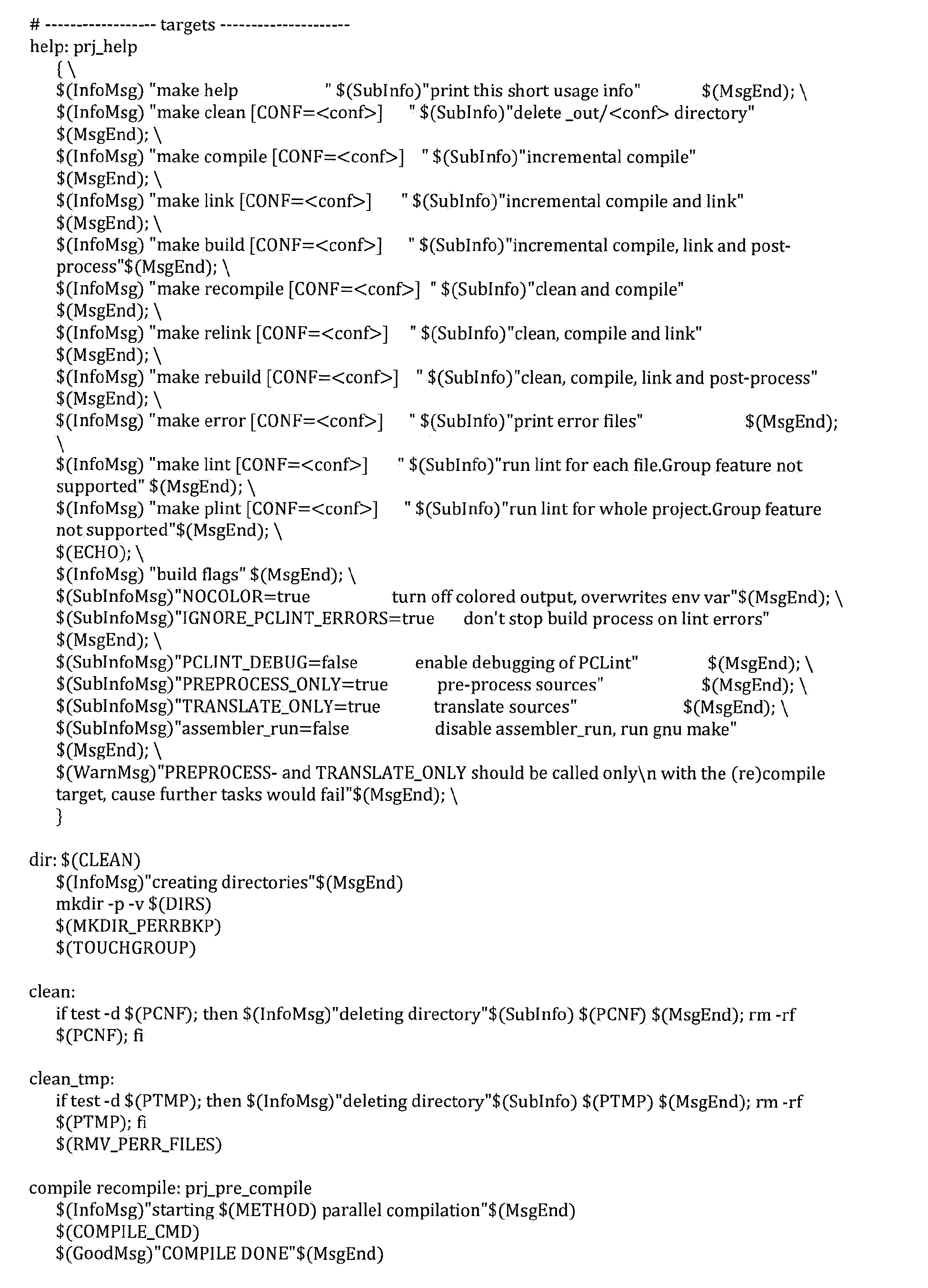

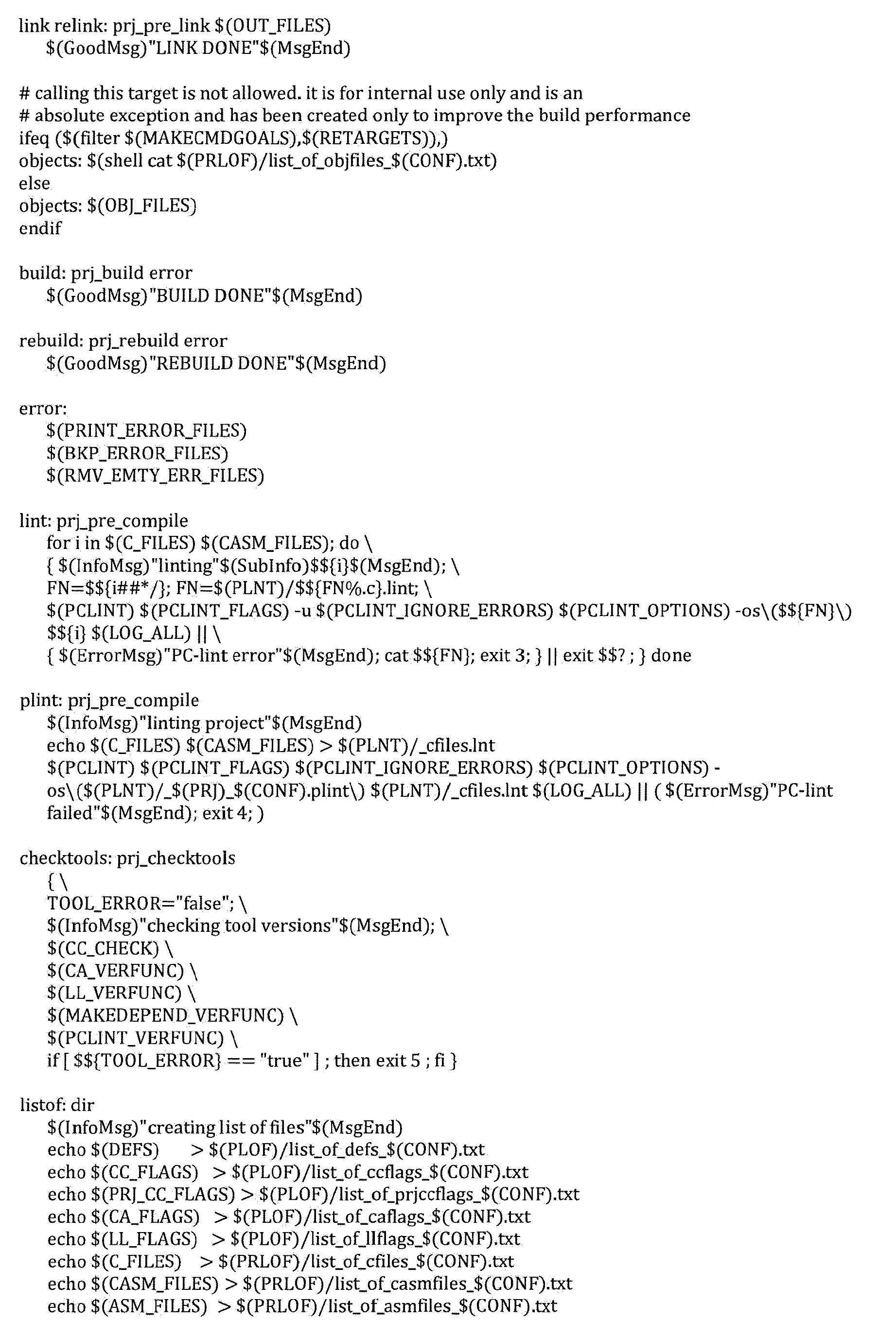

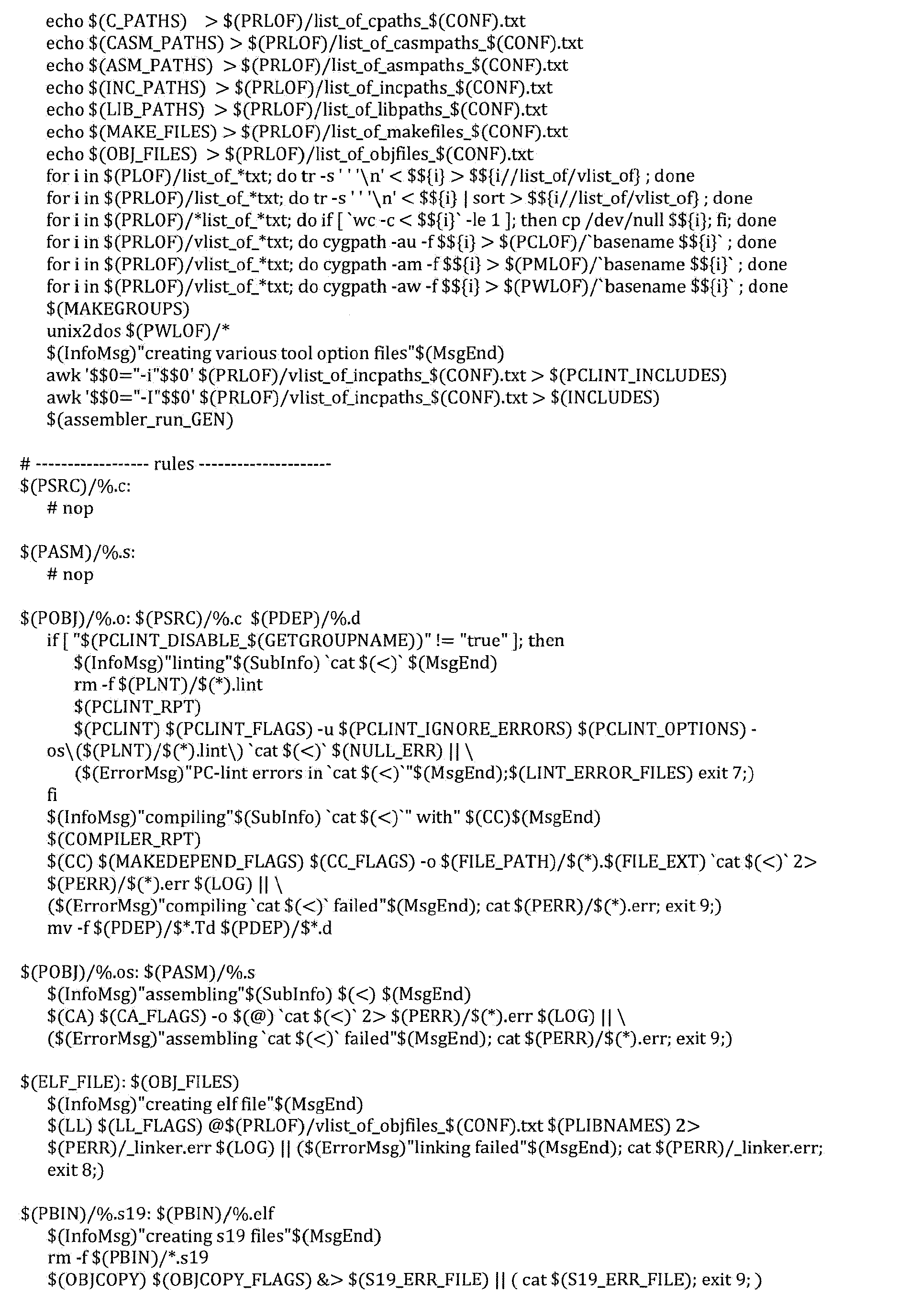

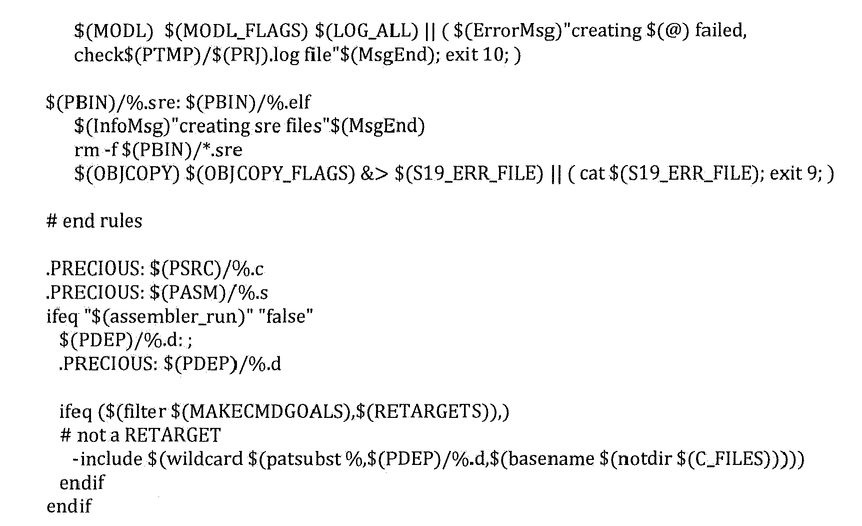

During the make procedure, the following file structure is generated:

```
_out
  _keep
  app01
  app02
```

The folder "_keep" contains files and folders that are kept during a "make rebuild". Folders "app01" and "app02" contain files for the configurations app01 and app02. As it can be taken from the above "makefile.mak" and "TC26x_TCGC.mak", they are deleted and newly build.

In the following, the structure of a configuration specific directory is described by means of the configuration "app01":

```
 _out
  app01
     asm
          STRT_TSP_Startup.s
     bin
     csm
     dep
          Adc.d
          Adc_Calibration.d
          BrsHw.d
          BswM_CalloutStubs.d
     err
    gen
    grps
          Adc.c
          Adc_Calibration.c
          BrsHw.c
          BswM_CalloutStubs.c
    inc
          Adc.h
          Adc_Calibration.h
          BrsHw.h
          BswM_CalloutStubs.h
    Int
    lof
          cyg
                vlist_of_asmfiles_app01.txt
                vlist_of_asmpaths_app01.txt
                ...
                vlist_of_cfiles_app01.txt
                vlist_of_cfiles_app01.txt
                vlist_of_incfiles_app01.txt
                vlist_of_incpaths_app01.txt
                ...
                vlist_of_objectfiles_app01.txt
          grp
                vlist_of_cc_app01_GRP1.txt
                vtist_of_cc_app01_GRP2.txt
                vlist_of_cfiles_app01_GRP1.txt
                vlist_of_cfiles_app01_GRP2.txt
                vlist_of_prjbauhausdisable_app01_GRP1.txt
                vlist_of_prjbauhausdisable_app01_GRP2.txt
                vlist_of_prjccflags_app01_GRP1.txt
                vlist_of_prjccflags_app01_GRP2.txt
                vlist_of_pclintdisable_app01_GRP1.txt
                vlist_of_pclintdisable_app01_GRP2.txt
                vlist_of_pclintflags_app01_GRP1.txt
                vlist_of_pclintflags_app01_GRP2.txt
                vlist_of_pclintmisra_app01_GRP1.txt
                vlist_of_pclintmisra_app01_GRP2.txt
          mix
                vlist_of_asmfiles_app01.txt
                vlist_of_asmpaths_app01.txt
                ...
                vlist_of_cfiles_app01.txt
                vlist of cfiles_app01.txt
                vlist_of_incfiles_app01.txt
                vlist_of_incpaths_app01.txt
                ...
                vlist_of_objectfiles_app01.txt
          rel
                list_of_asmfiles_app01.txt
                list_of_asmpaths_app01.txt
                ...
                list_of_cfiles_app01.txt
                list_of_cfiles_app01.txt
                list_of_incfiles_app01.txt
                list_of_incpaths_app01.txt
                ...
                list_of_objectfiles_app01.txt
                vlist_of_asmfiles_app01.txt
                vlist_of_asmpaths_app01.txt
                ...
                vlist_of_cfiles_app01.txt
                vlist_of_cfiles_app01.txt
                vlist_of_incfiles_app01.txt
                vlist_of_incpaths_app01.txt
                ...
                vlist_of_objectfiles_app01.txt
          win
                vlist_of_asmfiles_app01.txt
                vlist_of_asmpaths_app01.txt
                ...
                vlist_of_cfiles_app01.txt
                vlist_of_cfiles_app01.txt
                vlist_of_incfiles_app01.txt
                vlist_of_incpaths_app01.txt
                ...
                vlist_of_objectfiles_app01.txt
          list_of_caflags_app01.txt
          list of_ccflags_app01.txt
          list_of_defs_app01.txt
          list_of_llflags_app01.txt
          list_of_prjccflags_app01.txt
          vlist_of_caflags_app01.txt
                ...
     lst
     obj
     preasm
     preprc
     src
          Adc.c
          Adc_Calibration.c
           BrsHw.c
           BswM_CalloutStubs.c
     tmp
     rawcode
```

The file asm/STRT_TSP_Startup.s contains a reference to an assembler file and has the following contents:

```
 path/to/file/STRT_TSP_Startup.s
```

The folder src contains several files of source code references of project specific files that have to be compiled, e.g. Adc.c or BrsHw.c. These files do not contain the actual source code but contain a reference to the actual source code file. The contents of e.g. Adc.c is:

```
 src/hal/BASE/TC23x_ACstep/Aurix_MC-ISAR/adc_infineon_tricore/ssc/src/Adc.c
```

The folder grps contains text files of the same name like in the folder src, e.g. Adc.c or BrsHw.c. These files, however, contain the groups assigned to the specific file in the buldflags.mak. E.g. Adc.c contains:

```
 GRP1
```

and BrsHw.c contains:

```
 GRP2
```

The folder dep contains dependency files relating to the source code files, e.g. Adc.d that contains a list of dependencies for Adc.c:

```
 _out/app01/obj/Adc.o:\
 src/hal/BASE/TC23x_ACstep/Aurix_MC-ISAR/adc_infineon_tricore/ssc/src/Adc.c\
 src/hal/BASE/TC23x_ACstep/Aurix_MC-ISAR/adc_infineon_tricore/ssc/inc/Adc.h\
...
```

The folder inc contains include files, e.g. Adc.h. These files do not contain the actual include file but contain a reference to the actual include file. The contents of e.g. Adc.h is:

```
 #include " TC23x_ACstep/Aurix_MC-ISAR/adc_infineon_tricore/ssc/inc/Adc.h"
```

The folder Int contains results of the application of PC-lint during the build procedure.

The folder lof contains several folders and text files containing lists of parameters separated by a blank (list_of...) or separated by a line feed (vlist_of...). This folder e.g. comprises a blank separated list of compiler flags list_of_ccflags_app01.txt with the contents:

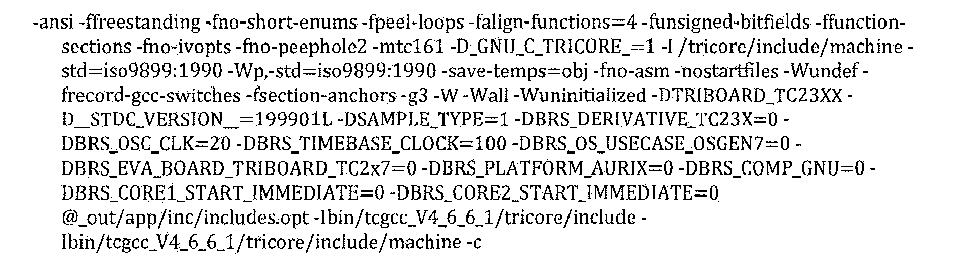

A similar file is given as vertical list vlist_of_ccflags_app01.txt with the contents:

```
 -ansi
 -ffreestanding
 -fno-short-enums
 -fpeel-loops
 -falign-functions=4
 -funsigned-bitfields
 -ffunction-sections
 -fno-ivopts
 -fno-peephole2
 -mtc161
 -D_GNU_C_TRICORE_=1
 -I
 /tricore/include/machine
 -std=iso9899:1990
 -Wp,-std=iso9899:1990
 -save-temps=obj
 -fno-asm
 -nostartfiles
 -Wundef
 -frecord-gcc-switches
 -fsection-anchors
 -g3
 -W
 -Wall
 -Wuninitialized
 -DTRIBOARD_TC23XX
 -D_STDC_VERSION_=199901L
 -DSAMPLE_TYPE=1
 -DBRS_DERIVATIVE_TC23X=0
 -DBRS_OSC_CLK=20
 -DBRS_TIMEBASE_CLOCK= 100
 -DBRS_OS_USECASE_OSGEN7=0
 -DBRS_EVA_BOARD_TRIBOARD_TC2x7=0
 -DBRS_PLATFORM_AURIX=0
 -DBRS_COMP_GNU=0
 -DBRS_CORE1_START_IMMEDIATE=0
 -DBRS_CORE2_START_IMMEDIATE=0
 @_out/app/inc/includes.opt
 -Ibin/tcgcc_V4_6_6_1/tricore/include
 -Ibin/tcgcc_V4_6_6_1/tricore/include/machine
 -c
```

In the folder lof/cyg, textfiles are stored listing parameters in a manner as they are accessible in the Cygwin environment 10. E.g. the file vlist_of_cfiles_app01.txt contains a vertical list (a list separated by line feeds) of c-files in the manner accessible in the Cygwin environment:

```
 /cygdrive/c/Data/ECA_MSW/src/app/rte/BswM_Callout_Stubs.c
 /cygdrive/c/Data/ECA_MSW/src/app/Stubs/BrsHw.c
 /cygdrive/c/Data/ECA_MSW/src/hal/BASE/TC23x_ACstep/Aurix_MC-
  ISAR/adc_infineon_tricore/ssc/src/Adc.c
  /cygdrive/c/Data/ECA_MSW/src/hal/BASE/TC23x_ACstep/Aurix_MC-
  ISAR/adc_infineon_tricore/ssc/src/Adc_Calibration.c
...
```

In the folder lof/win, text files are stored listing parameters in a manner as they are accessible in the Windows operating system environment 8. E.g. the file vlist_of_cfiles_app01.txt contains a vertical list (a list separated by carriage return and line feeds) of c-files in the manner accessible in the Windows operating system environment:

```
 C:\Data\ECA_MSW\src\app\rte\BswM_Callout_Stubs.c
 C:\Data\ECA_MSW\src\app\Stubs\BrsHw.c
...
 C:\Data\ECA_MSW\src\hal\BASE\TC23x_ACstep\Aurix_MC-ISAR\adc_infineon_tricore\ssc\src\Adc.c
 C:\Data\ECA_MSW\src\hal\BASE\TC23x_ACstep\Aurix_MC-
  ISAR\adc_infineon_tricore\ssc\src\Adc_Calibration.c
...
```

The folder lof/mix has similar contents like lof/win.

The folder lof/rel has similar contents like low/cyg and lof/win. However, files are given in relative nomenclature such that the list files are identical for the Cygwin environment 10 and the Windows operating system environment 8.

In the folder lof/grp, text files are stored containing parameters in correlation to the group they belong to. E.g. vlist_of_cflies_app01_GRP1.txt contains a list of c-files categorized as GRP1:

```
...
 src/hal/BASE/TC23x_ACstep/Aurix_MC-ISAR/adc_infineon_tricore/ssc/src/Adc.c
 src/hal/BASE/TC23x_ACstep/Aurix_MC-ISAR/adc_infineon_tricore/ssc/src/Adc_Calibration.c...
```

E.g. vlist_of_cfiles_app01_GRP2.txt contains a list of c-files categorized as GRP2:

```
 src/app/rte/BswM_Callout_Stubs.c
 src/app/Stubs/BrsHw.c
```

In the folder lof/obj, text files are stored.

In the file rawdata, the actual rule set for the build process concerning the several targets is assembled. It has the following contents:

```
 rule GRP1_Adc
 command = bash -c" ((bin/tcgcc_V4_6_3_0/bin/tricore-gcc.exe -MMD -MF $
 _out/app01/dep/Adc.d -ansi -ffreestanding -fno-short-enums -fpeel-loops $
  -falign-functions=4 -funsigned-bitfields -ffunction-sections $
 -fno-ivopts -fno-peephole2 -mtc161 -D_GNU_C_TRICORE_=1 -I $
 /tricore/include/machine -std=iso9899:1990 -Wp,-std=iso9899:1990 $
 -save-temps=obj -fno-asm -nostartfiles -Wundef -frecord-gcc-switches $
  -fsection-anchors -g3 -W -Wall -Wuninitialized -DTRIBOARD_TC23XX -03 $
  -D_STDC_VERSION_=199901L -DSAMPLE_TYPE=1 -DBRS_DERIVATIVE_TC23X=0 $
  -DBRS_OSC_CLK=20 -DBRS_TIMEBASE_CLOCK=100 -DBRS_OS_USECASE_OSGEN7=0 $
 -DBRS_EVA_BOARD_TRIBOARD_TC2x7=0 -DBRS_PLATFORM_AURIX=0 $
  -DBRS_COMP_GNU=0 -DBRS_CORE1_START_IMMEDIATE=0 $
  -DBRS_CORE2_START_IMMEDIATE=0 @_out/app01/inc/includes.opt $
  -Ibin/tcgcc_V4_6_3_0/bin/../tricore/include $
  -Ibin/tcgcc_V4_6_3_0/bin/../tricore/include/machine -c $
  TC23x_ACstep/Aurix_MC-ISAR/adc_infineon_tricore/ssc/src/Adc.c $
  -o $out 2> _out/app01/err/Adc.err 1>>_out/app01/tmp/ECA_MSW.log ∥ (echo $
  \" Compiling $
  TC23x_ACstep/Aurix_MC-ISAR/adc_infineon_tricore/ssc/src/Adc.c $
  failed \" ; cat_out/app01/err/Adc.err; exit 9 ; ) ) ) "
  description = Compiling $
  TC23x_ACstep/Aurix_MC-ISAR/adc_infineon_tricore/ssc/src/Adc.c
  depfile = _out/app01/dep/Adc.d
  build _out/app01/obj/Adc.o: GRP1_Adc $
 TC23x_ACstep/Aurix_MC-ISAR/adc_infineon_tricore/ssc/src/Adc.c
 rule GRP1_Adc_Calibration
 command = bash -c " ((bin/tcgcc_V4_6_3_0/bin/tricore-gcc.exe -MMD -MF $
 _out/app01/dep/Adc_Calibration.d -ansi -ffreestanding -fno-short-enums $
  -fpeel-loops -falign-functions=4 -funsigned-bitfields $
  -ffunction-sections -fno-ivopts -fno-peephole2 -mtc161 $
  -D_GNU_C_TRICORE_=1 -I /tricore/include/machine -std=iso9899:1990 $
  -Wp,-std=iso9899:1990 -save-temps=obj -fno-asm -nostartfiles -Wundef $
  -frecord-gcc-switches -fsection-anchors -g3 -W -Wall -Wuninitialized $
  -DTRIBOARD_TC23XX -03 -D_STDC_VERSION_=199901L -DSAMPLE_TYPE=1 $
  -DBRS_DERIVATIVE_TC23X=0 -DBRS_OSC_CLK=20 -DBRS_TIMEBASE_CLOCK=100 $
  -DBRS_OS_USECASE_OSGEN7=0 -DBRS_EVA_BOARD_TRIBOARD_TC2x7=0 $
  -DBRS_PLATFORM_AURIX=0 -DBRS_COMP_GNU=0 -DBRS_CORE1_START_IMMEDIATE=0 $
  -DBRS_CORE2_START_IMMEDIATE=0 @_out/app01/inc/includes.opt $
  -Ibin/tcgcc_V4_6_3_0/bin/../tricore/include $
  -Ibin/tcgcc_V4_6_3_0/bin/../tricore/include/machine -c $
  TC23x_ACstep/Aurix_MC-ISAR/adc_infineon_tricore/ssc/src/Adc_Calibration.c $
  -o $out 2> _out/app01/err/Adc_Calibration.err $
  1>>_out/app01/tmp/ECA_MSW.log ∥ (echo \" Compiling $
  TC23x_ACstep/Aurix_MC-ISAR/adc_infineon_tricore/ssc/src/Adc_Calibration.c $
  failed \" ; cat_out/app01/err/Adc_Calibration.err; exit 9;) ) ) "
  description = Compiling $
  TC23x_ACstep/Aurix_MC-ISAR/adc_infineon_tricore/ssc/src/Adc_Calibration.c
  depfile = _out/app01/dep/Adc_Calibration.d
  build _out/app01/obj/Adc_Calibration.o: GRP1_Adc_Calibration $
 TC23x_ACstep/Aurix_MC-ISAR/adc_infineon_tricore/ssc/src/Adc_Calibration.c
 rule GRP2_BrsHw
 command = cmd -c" ((pc-lint -i_out/app01/inc/ $
  -D_STDC_VERSION_=199901L -DSAMPLE_TYPE=1 -DBRS_DERIVATIVE_TC23X=0 $
  -DBRS_OSC_CLK=20 -DBRS_TIMEBASE_CLOCK=100 -DBRS_OS_USECASE_OSGEN7=0 $
  -DBRS_EVA_BOARD_TRIBOARD_TC2x7=0 -DBRS_PLATFORM_AURIX=0 $
  -DBRS_COMP_GNU=0 -DBRS_CORE1_START_IMMEDIATE=0 $
  -DBRS_CORE2_START_IMMEDIATE=0 $
 -ibin/tcgcc_V4_6_6_1/bin/../tricore/include $
  -ibin/tcgcc_V4_6_6_1/bin/../tricore/include/machine -i./etc/pc-lint $
  -u -zero\(400\) ./etc/pc-lint/global.lnt ./etc/pc-lint/misra-2012.lnt $
  ./etc/pc-lint/compiler-tcgcc.lnt./etc/pc-lint/project.lnt $
  -os\(_out/app01/lnt/BrsHw.lint\) ./$in 2>> /dev/null ∥ (echo \" $
  Linting src/app01/Stubs/BrsHw.c failed \" ; exit 7; ) ) && ( $
  bin/tcgcc_V4_6_6_1/bin/tricore-gcc.exe -MMD -MF _out/app01/dep/BrsHw.d $
  -ansi -ffreestanding -fno-short-enums -fpeel-loops $
  -falign-functions=4 -funsigned-bitfields -ffunction-sections $
  -fno-ivopts -fno-peephole2 -mtc161 -D_GNU_C_TRICORE_=1 -I $
  /tricore/include/machine -std=iso9899:1990 -Wp,-std=iso9899:1990 $
  -save-temps=obj -fno-asm -nostartfiles -Wundef -frecord-gcc-switches $
  -fsection-anchors -g3 -W -Wall -Wuninitialized -DTRIBOARD_TC23XX -Os $
  -D_STDC_VERSION_=199901L -DSAMPLE_TYPE=1 -DBRS_DERIVATIVE_TC23X=0 $
  -DBRS_OSC_CLK=20 -DBRS_TIMEBASE_CLOCK=100 -DBRS_OS_USECASE_OSGEN7=0 $
  -DBRS_EVA_BOARD_TRIBOARD_TC2x7=0 -DBRS_PLATFORM_AURIX=0 $
  -DBRS_COMP_GNU=0 -DBRS_CORE1_START_IMMEDIATE=0 $
  -DBRS_CORE2_START_IMMEDIATE=0 @_out/app01/inc/includes.opt $
  -Ibin/tcgcc_V4_6_6_1/bin/../tricore/include $
  -Ibin/tcgcc_V4_6_6_1/bin/../tricore/include/machine -c $
  src/app01/Stubs/BrsHw.c -o $out 2> _out/app01/err/BrsHw.err $
  1>>-out/app01/tmp/ECA_MSW.log ∥ (echo \" Compiling $
  src/app01/Stubs/BrsHw.c failed \" ; cat_out/app01/err/BrsHw.err; exit $
  9;)))"
  description = Linting and Compiling src/app01/Stubs/BrsHw.c
  depfile = _out/app01/dep/BrsHw.d
  build _out/app01/obj/BrsHw.o: GRP2_BrsHw src/app01/Stubs/BrsHw.c
  rule GRP2_BswM_Callout_Stubs
  command = cmd -c " ((pc-lint -i_0ut/app01/inc/ $
  -D_STDC_VERSION_=199901L -DSAMPLE_TYPE=1 -DBRS_DERIVATIVE_TC23X=0 $
  -DBRS_OSC_CLK=20 -DBRS_TIMEBASE_CLOCK=100 -DBRS_OS_USECASE_OSGEN7=0 $
  -DBRS_EVA_BOARD_TRIBOARD_TC2x7=0 -DBRS_PLATFORM_AURIX=0 $
  -DBRS_COMP_GNU=0 -DBRS_CORE1_START_IMMEDIATE=0 $
  -DBRS_CORE2_START_IMMEDIATE=0 $
  -ibin/tcgcc_V4_6_6_1/bin/../tricore/include $
  -ibin/tcgcc_V4_6_6_1/bin/../tricore/include/machine -i./etc/pc-lint $
  -u -zero\(400\) ./etc/pc-lint/global.lnt ./etc/pc-lint/misra-2012.lnt $
   ./etc/pc-lint/compiler-tcgcc.lnt ./etc/pc-lint/project.lnt $
  -os\(_out/app01/lnt/BswM_Callout_Stubs.lint\) ./$in 2>> /dev/null ∥ $
  (echo \" Linting src/app01/rte/BswM_Callout_Stubs.c failed \" ; exit $
  7;) ) && (bash -c bin/tcgcc_V4_6_6_1/bin/tricore-gcc.exe -MMD -MF $
 _out/app01/dep/BswM_Callout_Stubs.d -ansi -ffreestanding $
  -fno-short-enums -fpeel-loops -falign-functions=4 $
  -funsigned-bitfields -ffunction-sections -fno-ivopts -fno-peephole2 $
  -mtc161 -D_GNU_C_TRICORE_=1 -I /tricore/include/machine $
  -std=iso9899:1990 -Wp,-std=iso9899:1990 -save-temps=obj -fno-asm $
  -nostartfiles -Wundef -frecord-gcc-switches -fsection-anchors -g3 -W $
  -Wall -Wuninitialized -DTRIBOARD_TC23XX -Os $
  -D_STDC_VERSION_=199901L -DSAMPLE_TYPE=1 -DBRS_DERIVATIVE_TC23X=0 $
  -DBRS_OSC_CLK=20 -DBRS_TIMEBASE_CLOCK=100 -DBRS_OS_USECASE_OSGEN7=0 $
  -DBRS_EVA_BOARD_TRIBOARD_TC2x7=0 -DBRS_PLATFORM_AURIX=0 $
  -DBRS_COMP_GNU=0 -DBRS_CORE1_START_IMMEDIATE=0 $
  -DBRS_CORE2_START_IMMEDIATE=0 @_out/app01/inc/includes.opt $
  -Ibin/tcgcc_V4_6_6_1/bin/../tricore/include $
  -Ibin/tcgcc_V4_6_6_1/bin/../tricore/include/machine -c $
  src/app01/rte/BswM_Callout_Stubs.c -o $out 2> $
 _out/app01/err/BswM_Callout_Stubs.err1>>-out/app01/tmp/ECA_MSW.log ∥ $
  (echo \" Compiling src/app01/rte/BswM_Callout_Stubs.c failed \" ; cat $
 _out/app01/err/BswM_Callout_Stubs.err; exit 9; ) ) )"
 description = Linting and Compiling src/app01/rte/BswM_Callout_Stubs.c
 depfile = _out/app01/dep/BswM_Callout_Stubs.d
 build _out/app01/obj/BswM_Callout_Stubs.o: GRP2_BswM_Callout_Stubs $
 src/app01/rte/BswM_Callout_Stubs.c
...
```

Rule GRP1_Adc relates to processing the source file Adc.c. As it can be taken from lof/grp/vlist_of_cfiles_app01_GRP1.txt, Adc.c is assigned to Group GRP1. As it can be taken from buildflags.mak, static code analysis is not intended for GRP1-targets. Since the gcc compiler has better performance in a Unix like environment, the processing of Adc.c is accomplished in a bash user shell.

Rule GRP2_BrsHw relates to processing the source file BrsHw.c. As it can be taken from lof/grp/vlist_of_cfiles_app01_GRP2.txt, BrsHw.c is assigned to Group GRP2. As it can be taken from buildflags.mak, static code analysis by PC-lint is intended for GRP2-targets. Since PC-lint has better performance in a Windows environment, the processing of BrsHw.c is accomplished in a Windows command line environment.

The file rawdata may serve as control file for a build environment, e.g. Ninja build system to perform the build process.

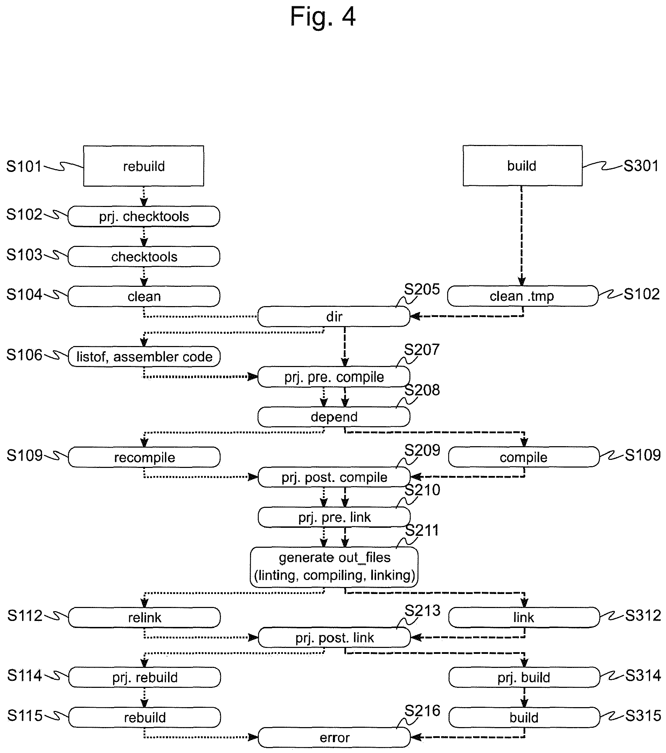

By referring to Fig. 4, a build process is described.

When initiating the build process, several different targets are available for the make process. Such targets are inter alia "rebuild" and "build". In the current configuration, "rebuild" compiles a project from the beginning, establishing a complete new build. "build" compiles only new parts of the project.

When the build procedure is initiated with the "rebuild" target in step S101, in a step S102, project specific tool versions in particular Cygwin are checked (see makefile.mak).

In a step S103, general tool versions like those of gcc and PC-lint are checked (see TC26x_TCGCC.mak).

In a step S104, the directory _out is cleansed if existent (see TC26x_TCGCC.mak).

In a step S205, the file structure _out is generated (see TC26x_TCGCC.mak).

In a step S106, the respective lof directories with the corresponding parameter files and the assembler code is established (see TC26x_TCGCC.mak).

In a step S207, target prj_pre_compile is performed (see TC26x_TCGCC.mak) and preparations for the actual build process are performed.

In a step S208, dependencies are established.

In a step S109, the target "recompile" is triggered (see TC26x_TCGCC.mak) performing compiling of the source files.

In a step S209, "prj_post_compile" is performed to clean up the compilation procedure (see makefile.mak).

In a step S210, "prj_pre_link" is performed (see makefile.mak) and lib files are copied to correct locations.

In a step S211, the output files are generated. This includes the linting, compiling and linking stage. Make creates the object files, binary files and other file types according to the rules, dependencies and file timestamps.

In a step S112, the object files are relinked in the "relink" targes (see TC26x_TCGCC.mak).

In a step S213 the target "prj_post_link" (see makefile.mak) is initiated.

In a step S114 the target "prj_rebuild" (see makefile.mak) is initiated and project-specific rebuild procedures are applied.

In a step S115, the target "rebuild" (see TC26x_TCGCC.mak) is initiated and global rebuild procedures are applied.

In a step S216, the target "error" (see TC26x_TCGCC.mak) is initiated and error handling like outputting error information collected during the build process is performed.

When the build procedure is initiated with the "build" target in step S301, in a step S302, the "clean_tmp" target is initiated (see TC26x_TCGCC.mak) and the tmp directories are cleansed only.

After that, steps S205, S207 and S208 are applied.

In a step S309, the "compile" target (see TC26x_TCGCC.mak) is initiated and compile operations on new files are performed.

After that, steps S209, S210 and S211 are applied.

In a step S312, the "link" target is initiated (see TC26x_TCGCC.mak) and the generated objects are linked.

After that, step S213 is performed.

In a step S314 the target "prj_build" (see makefile.mak) is initiated and project-specific build procedures are applied to the compiled files.

In a step S115, the target "build" (see TC26x_TCGCC.mak) is initiated and global build procedures are applied to the compiled files.

After that, step S216 is applied, containing error handling in the error target.

The above build environment allows performing tasks in an environment that allows an optimized processing of the task, depending on the task's runtime properties in different environments.

Further, parallel processing during the build process of several tasks is possible. This allows maximizing resource usage.

In particular by only including references in the directories folders dep, inc, and src, performance can be significantly increased.

Performance may be further enhanced by deactivating processes like virus scanners during the build procedure. In particular in the Cygwin environment, multiple files are created during the build procedure. Scanning of these files is on the one hand unnecessary since these files do not pose a thread and unnecessarily consume resources required for the build procedure.

By the above measurements, performance of the build environment is increased by 40% as compared to a conventional build environment.

The invention was described by means of an embodiment. The embodiment is only of explanatory nature and does not restrict the invention as defined by the claims. As recognizable by the skilled person, deviations from the embodiment are possible without leaving the invention according to the scope of the claimed subject-matter.

In this description, a data processing system or an electronic data processing system is a device configured to electronically process data stored on a data storage medium accessible to the electronic data processing system or transmitted to the electronic data processing system.

In this document, the terms "and", "or" and "either... or" are used as conjunctions in a meaning similar to the logical conjunctions "AND", "OR" (often also "and/or") or "XOR", respectively.

### LIST OF REFERENCE NUMBERS

- 1: electronic data processing device
- 2: data storage medium
- 4: external data storage
- 6: electronic data communication device
- 8: Microsoft Windows based operating system environment
- 10: Cygwin environment
- 12: compiler
- 14: build environment
- 16: PC-lint
- 18: Bauhaus
- 101: project specific Cygwin environment
- 102: Cygwin repository
- 103: development environment configuration
- 104: development environment templates

## Claims

1. A method for a build process in a build environment for building software executable by an electronic processor, comprising the steps:
a. defining a list of tasks that have to be performed for the build process,
b. determining the runtime characteristics for the tasks within the list of tasks in at least two operating system environments,
c. grouping the tasks into groups correlated to the at least two operating system environments according to the tasks' runtime characteristics,
d. providing a build environment system providing the at least two operating systems,
e. providing a build environment structure configured such that during the build process, the tasks are executed either on a first of the at least two operating system environments or a second of the at least two operating system environments, depending on the group the task was grouped in step c., and
f. executing the build process.

2. The method according to the previous method claim, wherein in step b. the runtime characteristics of the task is the efficiency at which the task operates in the at least two operating system environments.

3. The method according to one of the previous method claims, wherein in step b., c., d. and e. one of the at least two operating system environments is a Microsoft Windows based environment and another one of the at least two operating system environments is a Unix based environment, in particular a Cygwin environment.

4. The method according to one of the previous method claim(s), wherein in step d., the build environment system comprises an electronic data processing system having a Microsoft Windows operating system environment and a Cygwin environment installed thereon.

5. The method according to one of the previous method claims, wherein step f. further comprises the steps:
f.a. determining the build requirements for a list of source file targets,
f.b. defining a list of groups of source file targets,
f.c. grouping the source file targets into the list of groups according to the build requirements of the source file targets,
f.d. applying the build requirements to the list of source files according to the grouping.

6. The method according to one of the previous method claims, wherein step f. further comprises the steps:
f.e. deactivating background processes, in particular deactivating virus protection processes during the build procedure.

7. The method according to one of the previous method claims, wherein step e. further comprises the step:
e.a. providing inclusions and dependencies by reference.

8. A system for a build environment, comprising:
an electronic data processing device (1),
a Microsoft Windows based environment (8) installed on the electronic data processing device, and
a Unix based environment (10) installed on the electronic data processing device,
wherein the system is configured to perform the methods according to one of the previous method claims.

9. The system according to the previous system claim, wherein the electronic data processing device (1) comprises a Microsoft Windows operating system environment (8) on which a Unix based environment (10), in particular a Cygwin environment is installed.

10. The system according to one of the previous system claims, wherein the software build tools, in particular compilers or static code analysis tools are installed either in the Microsoft Windows based environment or in the Unix based environment, dependent on runtime characteristics of the build tools.
